(19) Europäisches Patentamt
European Patent Office
Office européen des brevets

(11) EP 2 067 347 B1

(12) EUROPEAN PATENT SPECIFICATION

(45) Date of publication and mention
of the grant of the patent:
**19.06.2013 Bulletin 2013/25**

(51) Int Cl.:
***H04M 3/56*** *(2006.01)*

(21) Application number: **07842899.2**

(22) Date of filing: **20.09.2007**

(86) International application number:
**PCT/US2007/079066**

(87) International publication number:
**WO 2008/036834 (27.03.2008 Gazette 2008/13)**

(54) **SYSTEMS AND METHODS FOR IMPLEMENTING GENERALIZED CONFERENCING**

SYSTEME UND VERFAHREN ZUR IMPLEMENTIERUNG GENERALISIERTER KONFERENZEN

SYSTÈMES ET PROCÉDÉS DE MISE EN OEUVRE D'UN SERVICE DE CONFÉRENCE GÉNÉRALISÉE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **20.09.2006 US 826341 P**

(43) Date of publication of application:
**10.06.2009 Bulletin 2009/24**

(73) Proprietor: **Alcatel Lucent**
**75007 Paris (FR)**

(72) Inventor: **WENGROVITZ, Michael, S.**
**Concord, MA 01742 (US)**

(74) Representative: **Wetzel, Emmanuelle et al**
**Alcatel Lucent**
**Intellectual Property & Standards**
**70430 Stuttgart (DE)**

(56) References cited:
**EP-A- 1 505 815        EP-A- 1 526 706**
**US-B1- 6 178 237**

**Description**

**BACKGROUND OF THE INVENTION**

Technical Field of the Invention

The present invention relates in general to communications systems, and in particular, to conferencing systems for managing conference calls.

Description of Related Art

Over the past several years, multi-party voice conference services have become common in the marketplace. Voice conferencing services enable three or more parties on different telephone devices to participate in a single call. Traditionally, such conferencing services were provided by a private branch exchange (PBX) or local exchange carrier (LEC) that allowed a conference call originator to manually dial the other parties of the conference call, place them on "hold" and then patch them together by simultaneously releasing the holds.

More recently, conference bridges have been developed that are able to combine multimedia communications from multiple telephone devices in a multi-party conference call. A similar device is disclosed in the document US 6 178 237 B1 (HORN DAVID N [US]), published on the 23rd January 2001. A conference bridge may be located within a public or private network and may be implemented on a single centralized conference bridge switch. or on multiple centralized or distributed switches. In conference bridge applications, the conference originator may reserve a certain number of connections (i.e., ports) on a conference bridge by manually interacting with an operator of the conference bridge or by directly interacting with an automated conferencing bridge system. Once the conference originator has reserved the requisite number of ports, the conference originator provides each participant with a dial-in telephone number and access code for the conference bridge and an access code for entering the conference call. To join the conference call, each participant must dial the dial-in telephone number for the conference bridge, and when prompted, enter the access code for the conference call.

However, because conference participants can only hear and speak to others within the boundary of a single conference room, existing conferencing systems have significant limitations, especially in applications such as security, first-response medical, emergency communications, as well as next-generation internet applications, such as social networking, online learning, simulations and gaming. For example, in an emergency situation involving coordination between police officers, firemen and an incident commander whose job it is to manage the combined team's overall response, if the police officers are speaking and listening to each other in one conference room and the firemen are speaking and listening to each other in another conference room, the incident commander must be separately connected to both conference rooms which may employ differing types of communication devices (i.e., telephones, two-way radios, etc.) to coordinate the response. Current conferencing technology does not allow a conference participant to use a single communication device to simultaneously speak and/or listen within multiple conference rooms.

In fact, current conferencing systems do not at all match the way in which groups of people naturally communicate. Specifically, in real-life situations, people do not speak and listen to each other within the fixed boundaries of conference rooms. For example, at a party or an informal meeting involving a number of people in various conversation groups, a person within one conversation group may be listening not only to this group, but also to one or more other groups. Similarly, when this person speaks, he/she may not only be heard by people in his/her conversation group, but also by one or more people in one or more other conversation groups. In addition, the person hosting the party may not be participating in any of the conversation groups, and may make an announcement that is heard by everyone, or almost everyone, in all, or almost all, of the conversation groups. Existing conferencing systems are unable to accommodate such commonplace conversation scenarios to which we are all accustomed. Realistic online gaming and social internet voice applications must evolve so as to accurately simulate such types of naturally occuring scenarios.

Therefore, what is needed is a system that is able to support generalized conferencing in complex conferencing scenarios.

**SUMMARY OF THE INVENTION**

A conference server, in one embodiment of the present invention, enables generalized conferencing by maintaining and applying a conferencing matrix. The conferencing matrix defines the respective output media provided to each of the conference participants based on the respective input media received from other conference participants. In particular, the conference server includes an interface communicatively coupled to a plurality of media devices operated by the conference participants, a conferencing module operable to manage the conference calls by utilizing the conferencing matrix and processing circuitry operable to control the conferencing module and coupled to receive the input media from the conference participants via the interface and to provide the input media to the conferencing module and further coupled to receive the output media from the conferencing module and to provide the output media to the conference participants via the interface.

In one embodiment, the conferencing matrix includes real-valued coefficients associated with the conference participants. The coefficients can be time-varying and/or determined based on one or more conference policies, such as time of day, speaking conference participants, simulated physical distance between speaking and listening conference participants, number of speaking and/or listening conference participants, preferences of speaking and/or listening conference participants and other conference server policies.

In a further embodiment, the input media includes one or more streams of voice and data, and each of the coefficients defines whether one of the conference participants is able to receive the input media from other conference participants. In another embodiment, each of the coefficients defines a gain to be applied to voice streams associated with a particular speaking one of the conference participants as heard by a particular listening one of the conference participants. For example, the output media provided to respective listening ones of the conference participants can be a linear weighted combination of voice streams associated with the speaking ones of the conference participants, in which the linear weighted combination is determined by respective gains applied to the speaking ones of the conference participants as defined by one row of the conferencing matrix.

In still a further embodiment, the conference server includes conference rooms for managing respective conference calls, each involving multiple conference participants, and the conferencing module is further operable to partition the conferencing matrix into respective constituent conferencing matrices, each associated with one of the conference rooms, when there is no overlap in conference participants between the conference rooms.

In yet a further embodiment, the conferencing matrix can be represented in singular value decomposition form. For example, the singular value decomposition form of the conferencing matrix can be calculated off-line and updated as conference participants leave or join conferences calls.

In another embodiment, the conferencing matrix can be a binary conferencing matrix. In this embodiment, the conferencing module may be able to decompose the binary conferencing matrix into the product of two subspace matrices to produce a subspace representation of the binary conferencing matrix. Alternatively, the conferencing module may be able to reduce the rank of the binary conferencing matrix.

A method for implementing generalized conferencing, in yet another embodiment of the present invention, includes providing a conferencing matrix of conference participants to conference calls and setting values of coefficients of the conferencing matrix to define a respective output media provided to each of the conference participants based on respective input media received from other conference participants. The method further includes receiving respective input media from conference participants, determining respective output media for each of the conference participants based on the conferencing matrix and providing the respective output media to the conference participants.

## BRIEF DESCRIPTION OF THE DRAWINGS

A more complete understanding of the present invention may be obtained by reference to the following detailed description when taken in conjunction with the accompanying drawings wherein:

FIGURE 1 illustrates an exemplary communications system including a conferencing server having a conferencing matrix that enables generalized conferencing to be implemented between conference participants in accordance with embodiments of the present invention;

FIGURE 2 illustrates an exemplary conference server in accordance with embodiments of the present invention;

FIGURE 3 illustrates exemplary conference rooms within the conference server that utilize the conferencing matrix to provide generalized conferencing for conference participants in accordance with embodiments of the present invention;

FIGURE 4 illustrates an exemplary operation of a conference server in accordance with embodiments of the present invention;

FIGURE 5 illustrates a more detailed operation of a voice mixer within the conference server in accordance with embodiments of the present invention;

FIGURE 6 illustrates an exemplary operation of a conference room in accordance with embodiments of the present invention; and

FIGURE 7 is a flowchart illustrating an exemplary process for implementing generalized conferencing in accordance with embodiments of the present invention.

## DETAILED DESCRIPTION OF THE DRAWINGS

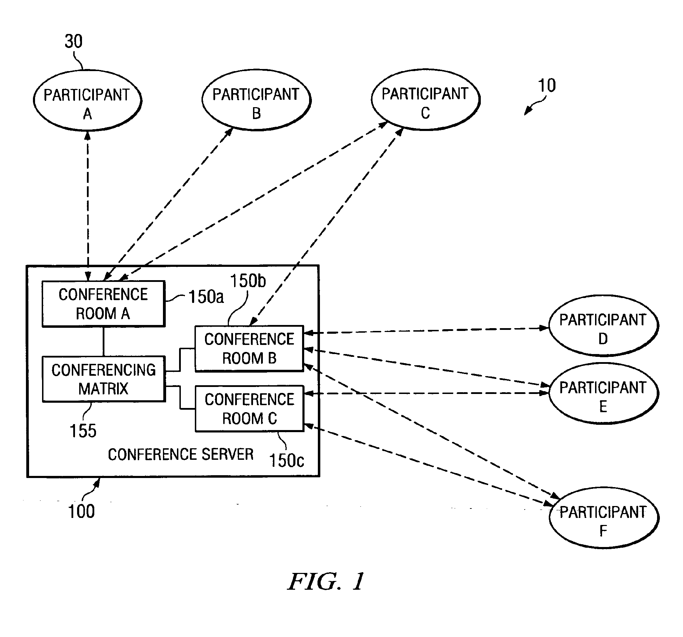

FIGURE 1 illustrates an exemplary communications system 10 providing generalized conferencing between multiple conference participants 30, in accordance with embodiments of the present invention. The communications system 10 includes a voice/data conference server 100 providing one or more conference rooms 150 for conference calls. Each conference room 150 is associated with a particular conference call, and is responsible for establishing the different connections (or legs) for the conference call and managing the states of the conference legs. For example, each conference room 150 can establish a respective conference leg for each voice and data connection to the conference call, add additional voice and/or data conference legs to the conference call, drop one or more voice and/or data conference legs and mute or un-mute one or more of the voice conference legs.

Each conference leg represents a logical connection between the conference server and a particular conference participant for a conference call. Such logical connections are illustrated in FIGURE 1 as dotted lines. It should be understood that the actual physical connection associated with a conference leg is between the conference server and a communications device operated by the conference participant associated with that conference leg. By way of example, but not limitation, such communications devices may include plain old telephone sets (POTS), cellular telephones, PBX phone sets, VoIP and SIP phones, two-way radio devices, laptop computers, personal computers and other devices capable of communicating one or more forms of media (i.e., voice, text, video and/or multimedia)). It should further be understood that each participant may operate different communications devices for different conference legs, or may use one communications device for multiple conference legs. However, for a particular communications device, all media destined for that communications device (whether for a single conference leg or multiple conference legs) is routed over a single physical connection (i.e., combined within the conference server). Similarly, all media sent from a particular communications device to the conference server 100 is provided to one or more conference rooms 150 within the conference server 100.

Thus, as shown in FIGURE 1, within the conference server 100, multiple conference rooms 150 (e.g., Conference Room A 150a, Conference Room B 150b, Conference Room C 150c), each capable of supporting multiple conference legs, are able to exist in parallel. In addition, in accordance with embodiments of the present invention, the conference server 100 is further able to support complex conferencing to accommodate any desired conferencing scenario between the participants 30 and the conference rooms 150. For example, the conference server 100 can allow one or more participants 30 to simultaneously participate in two or more conference calls in two or more conference rooms. In FIGURE 1, Participant C is simultaneously involved in conference calls with Participant A and Participant B through Conference Room A and with Participant D, Participant E and Participant F through Conference Room B. In addition, Participants E and F are involved in a conference call with Participants C and D through Conference Room B and in a separate conference call with each other through Conference Room C. However, voice between the conference rooms 150 is not mixed, so that participants 30 in one conference room (e.g., conference room 150a) do not unintentionally hear participants 30 in another conference room (e.g., conference room 150b). For example, Participants A and B will not be able hear Participant's D, E and F, and vice-versa.

To accommodate all of the different conferencing scenarios, the conference server 100 utilizes a conferencing matrix 155 that defines the individual outputs that are to be provided to each of the conference participants (i.e., Participants A-F) based on all of the different media inputs of all of the conference participants (i.e., Participants A-F). Thus, in its simplest form, the conferencing matrix 155 is a matrix that maps participant inputs to participant outputs. More specifically, each element (or coefficient) of the conferencing matrix 155 defines whether one of the conference participants 30 is able to receive the input media from another one of the conference participants 30. For example, a unity value of a particular element of the conferencing matrix 155 denotes that a particular participant (e.g., Participant A) is able to receive the input media provided by another particular participant (e.g., Participant B), whereas a value of zero indicates the contrary.

With respect to voice conferences, the conferencing matrix 155 further allows weighting of the voices of the conference participants 30. For example, in voice conferencing applications, each coefficient of the conferencing matrix 155 can define a gain to be applied to voice streams associated with a particular speaking conference participant as heard by a particular listening conference participant. In addition, the real-valued coefficients of the conference matrix 155 can be time-varying and/or determined based on various factors, such as time of day, speaking conference participants, simulated physical distance between speaking and listening conference participants, number of speaking and/or listening conference participants, preferences of speaking and/or listening conference participants and other conference server policies.

In matrix-vector terms, the conferencing matrix 155 represents linear combinations of sampled speaker signals to produce the vector of sampled listener signals. To produce the individualized outputs provided to each listener, the conferencing matrix 155 premultiplies a vector of sampled speaker signals. For example, the conferencing matrix 155 can be represented within the following matrix-vector notation:

$$\vec{l}(n) = C\vec{s}(n), \qquad\qquad (\text{Equation 1})$$

where *C* represents the *NxN* conferencing matrix, $\vec{l}(n)$ represents an *Nx1* vector of listeners and $\vec{S}(n)$ represents an *Nx1* vector of speakers.

The $\vec{l}(n)$ and $\vec{S}(n)$ column vectors represent discrete-time sampled representations of the analog voice signals heard and spoken respectively by participants 30. For example, the $j^{th}$ element of $\vec{S}(n)$, $s_j(n)$ is a discrete-time sampled signal corresponding to the actual analog signal $s_j(t)$, spoken by the $j^{th}$ speaker. Similarly, the $i^{th}$ element of $\vec{l}(n)$, $l_i(n)$, is a discrete-time sampled signal corresponding to the actual analog signal $l_i(t)$ heard by the $i^{th}$ listener. A typical sampling rate for telephone quality speech is 8 kHz, so that each vector of values $\vec{l}(n)$ and $\vec{S}(n)$ occurs 125 μsec later in time than the previous vector of values. However, faster sampling rates can also be used so that the listener and speaker vectors represent speech signals with higher fidelity and quality.

Without loss of generality, assume that the $l_i(h)$ and $s_i(n)$ signals actually correspond to the same person. That is, $l_i(n)$ represent what the $i^{th}$ participant hears, and $s_i(n)$ represents what this same $i^{th}$ participant says. In the representation in Equation 1, the $ij^{th}$ element of *C* represents the gain applied to the $j^{th}$ speaker as heard by the $i^{th}$ listener. Similarly, the $i^{th}$ row of *C*, which is the $i^{th}$ column of $C^T$, represents the set of weighting factors applied within the linear combination of speaker signals that contribute to the sound heard by the $i^{th}$ listener. That is,

$$l_i(n) = \vec{c}_i^{\,T}(n)\vec{s}(n) , \qquad\qquad \text{(Equation 2)}$$

where $\vec{c}_i$ is the $i^{th}$ column of $C^T$. In generalized conferencing, the $i^{th}$ listener signal is created by forming a linear combination, or a weighted sum, of the N speaker signals.

Thus, the conferencing matrix 155 allows for the possibility that a listener might hear various speakers at different volume levels. For example, a conferencing matrix 155 with time-dependent coefficients based on active speakers can be used to preferentially weigh one speaker over others. As a further example, the conferencing matrix 155 coefficients can be set so that a listener might hear one speaker, who is located physically nearby, at a louder level than a second speaker, who is located farther away.

Unlike voice, other forms of media, such as text messaging and video signals, are not necessarily formed via a linear combination, or superposition, of input signals. For example, a video conference signal is typically formed using a tiling operation, so that each individual participant's video signal is visible within a different square of the total image. That is, unlike voice where the signals are added together, the total video image is not formed by adding together the individual video images. Rather, each image is distinctly visible within a separate physical region of the tiled image.

Nonetheless, the conferencing matrix 155 does provide a concise and uniform way of specifying how images and text messages are seen and shown in a generalized fashion by conference participants. For example, a unity value in the $ij^{th}$ element of the conferencing matrix 155 denotes that the video signal transmitted by the $j^{th}$ participant should appear within the tiled image seen by the $i^{th}$ participant. This value set to zero either implies that the $j^{th}$ participant does not want the $i^{th}$ participant to see him, or that the $i^{th}$ participant prefers not to see the $j^{th}$ participant, or that there is a conferencing policy in effect.

Thus, in contrast to conventional video conferencing bridges, the conferencing matrix 155 offers each participant the opportunity to be seen by some participants within the conference and not seen by others. That is, unlike conventional video conferencing which offers the participant only the possibility to mute his video for all other viewers, the conferencing matrix 155 offers the possibility for a participant to mute his video for some users and not for others.

Similarly, the conferencing matrix 155 can represent a way of describing how text messages are exchanged between participants 30. A unity value of the $ij^{th}$ element of the conferencing matrix 155 denotes that the $i^{th}$ participant will receive instant messages sent by the $j^{th}$ participant, whereas a value of zero indicates the contrary.

In general, the conferencing matrix 155 may include multiple conferencing matrices 155 for voice, video and instant messaging. For example, some participants 30 may be participating in a generalized text messaging session while simultaneously participating in a generalized voice conference with other participants, while simultaneously participating in a generalized video conference with yet another set of other participants. In this case, the generalization of the generalized conferences may be represented as subscripted conferencing matrices 155 for voice, video and text, i.e., $C_{Voice}$, $C_{Video}$ and $C_{Text}$. In another embodiment, participants in a generalized voice conference might be in the same generalized matrix 155 with other participants exchanging text and video. For example, members of a group that have eavesdropping capabilities might be able to see the text messages and video of one or more other groups as well as listen in.

Regardless of the type or number of conferencing matrices 155 within the conference server 100, each conferencing matrix 155 can be constructed and/or specified in a number of different ways. In one embodiment, a human operator manipulates a graphical user interface (GUI) containing a graphical rendition of the conferencing matrix 155 and clicks or checks boxes within the rows and columns of the graphical matrix. In this embodiment, the human operator is essentially filling in the elements of the conferencing matrix 155. Each participant 30 may be a dial-in caller, or alternately, may be dialed-out, for example by the operator or administrator managing the conference. The rows and columns might be labeled with names or reference numbers of the participants, or alternately, might be labeled with group names. The operator may also be able to renumber the participants, for example, by dragging columns or rows around, so that groups of 1's appear nearby each other in the conferencing matrix 155, or the conferencing matrix 155 may be able to perform this renumbering automatically. For example, the system may seek to automatically renumber the participants when a new participant joins or an existing participant leaves the conference.

In general, when a new participant joins the conference server 100 with $N$ people already present, there are $2N + 1$ additional 1's and 0's that must be specified. Of these, the first $N$ values determine which of the $N$ existing listeners hear the new speaker, the second $N$ values determine which of the $N$ existing speakers are heard by the new listener, and the additional diagonal element of the $(N + 1)x(N + 1)$ conferencing matrix 155 an be set to either 1 or 0 in order to reduce computation, as will be described in more detail below. If set to 1, the new listener signal must be post-processed to subtract off the new speaker.

In another embodiment, the new participant specifies the elements of the $N + 1^{th}$ column and the $N + 1^{th}$ row. However, it may be the case that just because the $N + 1^{th}$ participant seeks to hear or speak to other participants, they may not desire this to happen. For example, one or more other speakers may not wish to allow themselves to be heard by the new participant.

Therefore, in another embodiment, each of the existing participants, rather than the new participant, specifies the elements of the $N + 1^{th}$ column and the $N + 1^{th}$ row. However, it may the case that just because the $N + 1^{th}$ participants seek to hear or speak to the new participant, he/she may not desire this to happen. For example, the new participant may only wish to hear some of the existing participants proposing to be heard.

In yet another embodiment, the $N + 1^{th}$ column of $C$ can be created as a combination of existing and new participant preferences. Specifically, this column can be formed as the dot product, or logical AND, of two column vectors $L\vec{e} \cdot S\vec{n}$, representing the existing-listener intent vector and the new-speaker intent vector, respectively. The $i^{th}$ element of $L\vec{e}$ is a 1 if the $i^{th}$ existing listener intends to hear the new speaker, and the $i^{th}$ element of $S\vec{n}$ is a 1 if the new speaker intends for the $i^{th}$ existing listener to hear him. Therefore, the $i^{th}$ element of the new column in $C$ is only a 1 if the corresponding dot product is a 1; that is, if the $i^{th}$ existing listener intends to hear the new speaker AND if the new speaker intends for the $i^{th}$ existing listener to hear him.

Similarly, the $N + 1^{th}$ row of $C$ can be created as the dot product of two row vectors $L\vec{n}^T \cdot S\vec{e}^T$ representing new-listener intent vector and the existing-speaker intent vectors respectively. The $i^{th}$ element of the row vector $L\vec{n}^T$ is a 1 if the new listener intends to hear the $i^{th}$ existing speaker, and the $i^{th}$ element of the row vector $S\vec{e}^T$ is a 1 if the $i^{th}$ existing speaker intends for the new listener to hear him. Therefore, the $i^{th}$ element of the new row in $C$ is only a 1 if the corresponding dot product is a 1; that is if the new listener intends to hear the $i^{th}$ existing speaker, AND if the existing speaker intends to be heard by the $i^{th}$ new listener.

Using this representation, the conferencing matrix 155 can be derived by forming two dot products of the four preference vectors $L\vec{e}$, $S\vec{n}$, $L\vec{n}^T$ and $S\vec{e}^T$. These preference vectors may be based on individual participants, or defined based on groups. For example, existing participants may belong to one or more groups, denoted, for example, as Groups 1-M, and the four preference vectors for each group are defined. Then, when a new participant joins and authenticates himself/herself as a member of the group, the four preference vectors are extracted from a table and used to derive the elements in the new column and new row of $C$.

In still another embodiment, policies might also be used to fill in the elements of the conferencing matrix 155. For example, one policy might be to allow a user who joins as a member of Group 3 to hear and speak with other Group 3 participants, as well as to only hear Group 1 participants. This policy might also override the preferences of the other participants. As another example, the policy might be used to honor the existing and new participant preferences, or in some cases, to override these preferences. In this embodiment, an override flag can be set for each value of the new column in $C$. For example, the $i^{th}$ element of the new column might be formed as $\overline{Oc_i} \cdot Le_i \cdot Sn_i + Oc_i \cdot Pc_i$, where $\cdot$ denotes logical AND, + denotes logical OR, and - denotes logical NOT. If the override bit $Oc_i$ was set to 0, the existing preferences would be honored, whereas if the override bit was set to 1, the policy bit $Pc_i$ would be applied. In the latter case, setting the policy bit $Pc_i$ to 1 would cause the $i^{th}$ listener to hear the new speaker independent of the speaker or listener preferences. Similarly, the $i^{th}$ element of the new row might be formed as $\overline{Or}_i \cdot Ln_i \cdot Se_i + Or_i \cdot Pr_i$. If the override bit $Or_i$ was set to 0, the existing preferences would be honored whereas if the override bit was set to 1, the policy bit $Pr_i$ would be applied. In the latter case, setting the policy bit $Pr_i$ to 1 would case the new listener to hear the $i^{th}$ participant independent of speaker or listener preferences.

In yet another embodiment, policy may be employed to honor the preferences of the new participant over that of the existing participants, or alternately, to honor the preference of the existing participant over that of the new participant. It should be understood that there are many similar possibilities and combinations, and only a few of these are specifically described herein.

A variety of mechanisms exist by which a new participant may authenticate himself/herself as belonging to a specific group. In one embodiment, the authentication occurs via entry of a multidigit dual tone multi-frequency (DTMF) access code when the new participant dials in. For example, the conference server 100 may be managed to have a scheduled recurring conference every Monday for the next six months starting at 9AM, lasting for 90 minutes, with five groups, each having a different specific 7-digit DTMF access code. If a caller dialed in during the scheduled time and entered the access code corresponding to one of the four groups, the conferencing matrix 155 would automatically be reconstructed according to four preference vectors for the user in the new group.

For example, Groups 1-4 might exist where participants hear and speak to only the other members in their group, whereas a member of Group 5 would not only speak to and listen to other Group 5 members, but also eavesdrop on Groups 1 and 3. In this example, a dial-in participant entering the access code corresponding to Group 5 would derive the special eavesdropping properties of Group 5, whereas a dial-in participant entering an access code corresponding to one of the other four groups would not have this property. Dial-in participants entering an invalid group code, or trying to join the generalized conference outside the scheduled time would be denied entry. Thus, in contrast to the traditional use of access codes to merely join a particular conference call, in accordance with embodiments of the present invention, the access code may be used to identify a dial-in caller as belonging to a specific group, and to thereby specify the elements of the conferencing matrix 155.

Group access codes may also be combined with leader and participant privileges. For example, each group may have separate leader and participant codes. Entry of a single access code by the dial-in participant would designate both the group and the leader/participant status. In one embodiment, if a member of a group dialed out to another new participant, the new participant would belong to the same group. For example, a member of Group 3 could not dial out to a participant who would then belong to Group 5.

In another embodiment, a participant having special administrative properties, or who belongs to a group having special administrative properties, may be able to dial out and also designate the group code by DTMF entry. For example, an incident commander belonging to Group 5, may be able to dial out to a participant who is then joined to Group 1, or to Group 2.

A variation of the above access code techniques is to combine the policy bit with the group access properties. For example, if a specific policy bit was set to 1, this may allow a participant to modify his speaking and listening properties. As another example, policy may allow for a group moderator to be able to override properties for all members of his/her group. As a further example, an operator may have the ability to override the properties for one or more groups. It should be understood that there are many similar possibilities and combinations, and only a few of these are specifically described herein.

Referring again to FIGURE 1, in an exemplary operation of the conference server 100, a conference participant 30 or administrator/operator can initiate a conference call by providing an instruction to the conference server 100 that causes the conference server 100 to create a conference room 150 for the conference call and construct or reconstruct the conferencing matrix 155 based on the conference call. In one embodiment, the conference participant 30 or administrator/operator generates the instruction by operating a console that can invite multiple participants 30 to the conference. In this embodiment, the communications devices that the participants 30 are using may automatically answer, or alternately, one or more of the participants 30 may be required to accept the invite, for example, by depressing one or more dual tone multi-frequency (DTMF) keys on their communications device.

In another embodiment, a participant 30 or administrator/operator depresses a DTMF key or special sequence of keys on a communications device to generate an invitation to the conference server 100. In this embodiment, upon receipt of the invitation, the conference server 100 may automatically answer and then dial-out to invite a predetermined list of other participants 30 to the conference. In yet another embodiment, the conference participant 30 generates the instruction to the conference server 100 by dialing-in to the conference server 100, and either entering an access code and/or PIN or interacting with an IVR to individually invite each participant 30 or to invite a pre-designated list of participants 30 to a specific conference. In still another embodiment, the conference participant 30 or administrator/operator provides the instruction to the conference server 100 via a graphical user interface (GUI) that provides a conference application program interface (API) to the conference server 100. For example, the conference API can be accessed via a laptop computer, a personal computer, a cell phone, a personal digital assistant (PDA) or other similar data device.

As described above, once the conference server 100 receives the instruction to initiate a conference call, the conference server 100 creates a conference room 150 for the conference call and constructs or reconstructs the conferencing matrix 155 based on the conference call. The conference room 150 operates to establish and manage the conference call based on the conferencing matrix 155 and other conference policies maintained by the conference server 100. For example, the conference room 150 generates messages to invite conference participants to join the conference call, authenticates conference participants wanting to join the conference call (e.g., with a conference room identifier and/or a participant identifier), establishes a separate conference leg for each voice and data connection to the conference call, mixes incoming voice received from the conference participants and transmits the mixed voice back out to the conference participants via unicast data packets, provides various data conferencing services to the conference participants during the conference call, such as instant messaging, presentation sharing, desktop sharing and video, and implements various policies for managing the conference legs of the conference call (e.g., muting or un-muting one or more participants, adding and/or dropping one or more participants). The conference room 150 is further operable to release one or more participants from the conference call either upon request from the participant (e.g., hang-up or via GUI) or based upon a policy associated with the conference call (e.g., based on a pre-determined time of release, occurrence of an event or action of another participant).

In an exemplary operation of the conference room 150, if during the conference call, the conference room 150 simultaneously receives voice from multiple participants 30, the conference room 150 mixes the voice and transmits the mixed voice back out to the participants 30 involved in the conference call. For example, if Conference Room A 150a receives incoming voice from Participant A and Participant B, based on the conferencing matrix 155, Conference Room A 150a mixes the voice and transmits the mixed voice back out to Participants A, B and C. To avoid echoes, Conference Room A 150a transmits the voice from Participant A to only Participants B and C, transits the voice from Participant B to Participants A and C, and transmits the voice from Participant C to Participants A and C.

In one embodiment, the conference server 100 creates and manages the conference rooms 150 in specialized conferencing hardware or circuitry. In another embodiment, the conference server 100 creates and manages and conference rooms 150 using a combination of specialized conferencing hardware or circuitry, software and/or firmware. In yet another embodiment, the conference server 100 executes software routines on a standard, general-purpose personal computer (PC) to create and manage the conference rooms 150. In this embodiment, the conference server 100 is designed to enable additional separate general-purpose PCs to be stacked together for increased system scalability and redundancy. As such, no special hardware or circuitry, such as DSP chips and boards and high speed audio busses, is required, thereby minimizing manufacturing costs of the conference server 100.

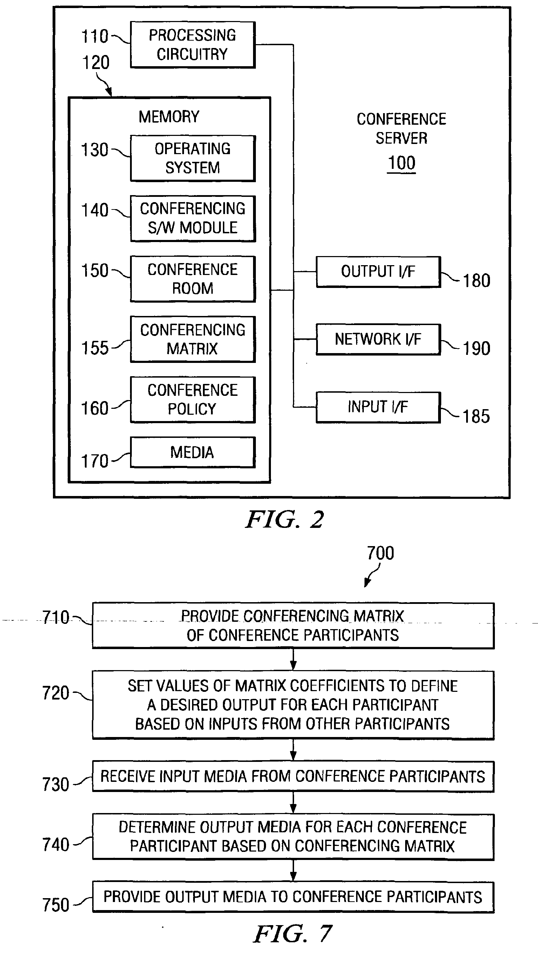

Referring now to FIGURE 2, a more detailed operation of the conference server 100 will now be described. The conference server 100 includes processing circuitry 110, a memory 120 and various interfaces 180, 185 and 190. For example, to check the status of the conference server (e.g., troubleshoot problems, receive status reports, etc.), the interfaces can include an input interface 185 coupled to receive operator input from an input device, such as a keyboard, mouse, IP network or other similar input device and an output interface 180 coupled to provide status information to an output device, such as a display, speakers, printer, IP network or other output device. In addition, the interfaces can include a network interface 190 communicatively coupled to transmit and receive voice and/or data to and from various communications devices.

The memory 120 includes an operating system 130 and a conferencing software module 140. The processing circuitry 100 includes one or more processors that are capable of executing the operating system 130 and the conferencing software module 140. As used herein, the term "processor" is generally understood to be a device that drives a general-purpose computer, such as a PC. It is noted, however, that other processing devices, such as microcontrollers, Field Programmable Gate Arrays (FPGAs), Application Specific Integrated Circuits (ASICs), or a combination thereof, can be used as well to achieve the benefits and advantages described herein. The memory 120 includes any type of data storage device, including but not limited to, a hard drive, random access memory (RAM), read only memory (ROM), flash memory, compact disc, floppy disc, ZIP® drive, tape drive, database or other type of storage device or storage medium.

In a general operation of the conference server 100, the processing circuitry 110 accesses and runs the conferencing software module 140 to initiate and control a conference call between multiple participants. During execution of the conferencing software module 140, the processing circuitry 110 is operable to create a conference room 150 in the memory device 120 for the conference call and to connect the conference participants together in a conference call (i.e., establish the conference legs for the conference call) via the conference room 150. Once the conference room 150 is established, in an exemplary embodiment, the conference room 150 communicates with one or more external interfaces (e.g., network interface 190) to receive incoming media 170 (e.g., voice and/or data) from the conference participants, process the received media 170 using the processing circuitry 110 and transmit the processed media 170 (e.g., mixed voice and/or data) back out to the conference participants during the conference call.

In addition, the conference room 150 and/or processing circuitry 110 can construct, specify and manage the conferencing matrix 155 and access one or more predefined conference policies 160 to control and/or manage the conference call and conferencing matrix 155. Once accessed, the processing circuitry 110 performs routines dictated by the conferencing matrix 155 and/or policies 160. For example, in an exemplary embodiment, a policy 160 may identify one or more conference participants to be included in a conference call. In another exemplary embodiment, a policy 160 may control muting or un-muting of one or more participants during the conference call, and therefore, provide instructions for specifying elements of the conferencing matrix 155. In a further exemplary embodiment, a policy 160 may instruct the conference server 100 to create a conference room 150 for a conference call based on the time of day and/or day of week. Other examples of policies 160 include setting and/or changing the conferencing matrix 155 based on the current speaking conference participants, simulated physical distance between speaking and listening conference participants, number of speaking and/or listening conference participants and preferences of speaking and/or listening conference participants.

For example, in an exemplary embodiment, the conferencing matrix 155 may be static or be made time-dependent based on certain policies 160. Using the matrix-vector notation from before, a time-dependent conferencing matrix 155 may be represented as:

$$\vec{l}(n) = C(n)\vec{s}(n) \qquad\qquad \text{(Equation 3)}$$

However, $C(n)$ does not necessarily vary at the same rate required to adequately sample and represent the listener and speaker signals. For example, the coefficients of C may be a function of time-dependent policies 160, such as the time of day, who is speaking, or the dynamic conferencing policies of the service provider or enterprise. Or, the coefficients of C may depend on other more complex time-dependent policies 160, such as the virtual distance between speakers and listeners, the number of currently active speakers, the number of currently active conferences, speaker preferences, listener preferences, conference server policies, and many other factors.

In general, the values of C are real-valued positive numbers, and the conferencing matrix representation $\vec{l} = C\vec{s}$ allows speakers to be weighted by different levels of gain for each listener. For example, in another exemplary embodiment, the conferencing matrix 155 may be an active-speaker dependent conferencing matrix 155 that allows one speaker to be heard preferentially over other speakers. For example, in a usage case involving three participants, with participant 3 listening but not speaking to participants 1 and 2, but preferring to hear participant 1, the processing circuitry 110 may select one of two possible conferencing matrices:

$$C(1) = \begin{pmatrix} 0 & 1 & 0 \\ 1 & 0 & 0 \\ 1 & 1 & 0 \end{pmatrix} \qquad\qquad \text{(Equation 4)}$$

or

$$C(2) = \begin{pmatrix} 0 & 1 & 0 \\ 1 & 0 & 0 \\ 1 & .25 & 0 \end{pmatrix} \qquad\qquad \text{(Equation 5)}$$

$C(1)$ would be selected at times whenever only participant 1 or participant 2 is actively speaking, and $C(2)$ would be selected at all times when both speakers are active. In this case, at all times when there are two active speakers, the time-dependent conferencing matrix 155 allows participant 3 to preferentially hear participant 1 over participant 2.

In another usage case involving two students (participants 1 and 2) and a teacher (participant 3) together in a conference, if there was only a single active speaker, or two students talking while the teacher is silent, the processing circuitry 110 would select for the conferencing matrix:

$$C(1) = \begin{pmatrix} 0 & 1 & 1 \\ 1 & 0 & 1 \\ 1 & 1 & 0 \end{pmatrix} \qquad \text{(Equation 6)}$$

whereas if one or both students and the teacher were talking at the same time, the processing circuitry 110 would select for the conferencing matrix:

$$C(1) = \begin{pmatrix} 0 & g & 1 \\ g & 0 & 1 \\ 1 & 1 & 0 \end{pmatrix} \qquad \text{(Equation 7)}$$

and g is some gain value where $0 < g < 1$, so that the teacher is preferentially heard by the students.

Yet another usage case might involve several incident managers in an emergency response scenario talking at the same time. In this case, the processing circuitry 110 might weigh more heavily the more experienced managers' voices over the other managers' voices.

In one embodiment, the coefficients might change only if there are more than two active speakers. In another embodiment, the processing circuitry 110 might give preference to one speaker, and at other times, give preference to another speaker based on policies 160. In yet another embodiment, the processing circuitry 110 might give preference to speakers dependent upon how much they have been speaking recently, or not speaking recently.

In any case, to determine the active speakers for a time-dependent conferencing matrix 155, the processing circuitry 110 would use an algorithm that is more robust than simply selecting the highest amplitude signal levels. Otherwise, the conferencing matrix 155 might incorrectly weigh background noise, rather than the speech from preferred speakers. For example, an exemplary algorithm for determining the active speakers to a conference call selects the highest amplitude signal as a possible candidate, and then discards it if it does not have the characteristics of human speech, such as typical pitch period, frequency contrast and structure.

Since in many cases, not all speakers are actually speaking, the linear combination of N speaker signals in matrix-vector notation can be written as:

$$l_i = \sum_{j\_for\_active\_speakers} C_{ij} s_j \qquad \text{(Equation 8)}$$

Therefore, one algorithm for implementing the conferencing matrix 155 is to first determine the values of $s_j$ that are non-zero, then multiply these values by the corresponding weights $C_{ij}$, and then sum together the results. Using this algorithm, only the weighted values of $s_j$ for active speakers are included within the N linear combinations computed by the processing circuitry 110.

In generalized conferencing, the specific linear combination of speaker signals is generally different for each listener, i.e., each row of C may differ from all other rows. However, in many cases some rows of C are either identical, or can be represented as linear combinations of other rows. Thus, the corresponding computation required by the processing circuitry 110 to perform the linear combination of speaker signals may be reduced. For example, consider the case where:

$$\vec{l} = \begin{pmatrix} 1 & 1 & 1 & 0 & 0 & 0 \\ 1 & 1 & 1 & 0 & 0 & 0 \\ 1 & 1 & 1 & 0 & 0 & 0 \\ 0 & 0 & 0 & 1 & 1 & 1 \\ 0 & 0 & 0 & 1 & 1 & 1 \\ 0 & 0 & 0 & 1 & 1 & 1 \end{pmatrix} \vec{s} \qquad \text{(Equation 9)}$$

Here, although each listener can be determined by a linear combination of speaker signals, it can be seen that $l_1$, $l_2$ and $l_3$ are determined by the exactly same combination of speaker signals, and that $l_4$, $l_5$ and $l_6$ are determined by exactly the same combination of speaker signals that is distinct from the first. Therefore, $\vec{l}$ can be written in an outer-product form as:

$$\vec{l} = \begin{pmatrix} 1 \\ 1 \\ 1 \\ 0 \\ 0 \\ 0 \end{pmatrix} (1 \quad 1 \quad 1 \quad 0 \quad 0 \quad 0)\vec{s} + \begin{pmatrix} 0 \\ 0 \\ 0 \\ 1 \\ 1 \\ 1 \end{pmatrix} (0 \quad 0 \quad 0 \quad 1 \quad 1 \quad 1)\vec{s} \qquad \text{(Equation 10)}$$

i.e., C can be written as the sum of two matrices, so that:

$$\vec{l} = C\vec{s} = (C_1 + C_2)\vec{s} = (\vec{u}_1\vec{u}_1^T + \vec{u}_2\vec{u}_2^T)\vec{s} \qquad \text{(Equation 11)}$$

In this case, only two separate linear combinations of the speaker inputs, $\vec{u}_1^T\vec{s}$ and $\vec{u}_2^T\vec{s}$ must be computed, and not $N$ separate linear combinations, as might be implied by the $NxN$ conferencing matrix. These linear combinations might also be performed for only the active speakers so that:

$$\vec{l} = \vec{u}_1 \left( \sum_{j\_for\_active\_spea\,ker\,s} u_{1j}s_j \right) + \vec{u}_2 \left( \sum_{j\_for\_active\_spea\,ker\,s} u_{2j}s_j \right) \qquad \text{(Equation 12)}$$

In another exemplary embodiment, a simplification of the required number of linear combinations occurs whenever the matrix $C$ is rank deficient. That is, whenever the matrix $C$ is not full rank, some of its rows can be written as linear combinations of other rows. In the example matrix of Equation 9, rows 2 and 3 are a linear combination of row 1. Similarly, rows 5 and 6 are a linear combination of row 4. For the arbitrary conferencing matrix 155, $C$ can always be written in the Singular Value Decomposition (SVD) form as:

$$C = U\Lambda V^T \qquad \text{(Equation 13)}$$

where the columns of the *NxN* matrix *U* span the range space of *C*, the columns of the *NxN* matrix *V* span the range space of $C^T$, and the values of the diagonal matrix A are the singular values. The number of non-zero singular values in A is the rank *of C*.

In the SVD representation of *C*, the columns of *U* are the eigenvectors of $CC^T$, the columns of *V* are the eigenvectors of $C^TC$, and the singular values are the positive square roots of the eigenvalues of $CC^T$ or of $C^TC$. The rows of the matrix *C* (and the columns of the matrix *C*) are linear combinations of each other if and only if *C* is not full rank, i.e., if and only if there exist some values of A that are zero. In this case, *C* can be written in a vector form that includes only those eigenvectors corresponding to principal non-zero singular values:

$$C = \sum_{\lambda_i \neq 0} \vec{u}_i \lambda_i \vec{v}_i^T \qquad \text{(Equation 14)}$$

Thus, if there are *R* non-zero values in A, only *R* distinct linear combinations of speaker signals must be computed.

As an example, consider a generalized conferencing scenario involving *N* participants with a conferencing matrix *C* that is *NxN*, but that is only rank 2. Then,

$$\vec{l} = (\vec{u}_1 \lambda_1 \vec{v}_1^T + \vec{u}_2 \lambda_2 \vec{v}_2^T)\vec{s} \qquad \text{(Equation 15)}$$

so that:

$$\vec{l} = \vec{u}_1 l_{c1} + \vec{u}_2 l_{c2} \qquad \text{(Equation 16)}$$

It can be seen that the listener vector is comprised of the weighted sum of two listener vectors $\vec{u}_1$ and $\vec{u}_2$, which are the first two columns of *U* in the SVD. The weights in this linear combination $l_{c1}$ and $l_{c2}$ are themselves derived from linear combinations of speaker signals, i.e.:

$$l_{c1} = \lambda_1 \vec{v}_1^T \vec{s} \qquad \text{(Equation 17)}$$

and

$$l_{c2} = \lambda_2 \vec{v}_2^T \vec{s} \qquad \text{(Equation 18)}$$

where $\lambda_1 \vec{v}_1^T$ and $\lambda_2 \vec{v}_2^T$ are obtained from the singular values and the first two columns of *V* in the SVD.

In this embodiment, the SVD of the conferencing matrix 155 is used to reduce the computation performed by the processing circuitry 110. Thus, instead of computing *N* linear combinations of the speaker inputs, only R linear combinations are required, where R is the rank of *C*. The linear combinations are formed using the columns of *V* from the SVD multiplied by the speaker vector. Each of these linear combinations, multiplied by its singular value, scales the associated column of *U*, and the vector results are then added together to form the total listener signal.

Although calculation of the SVD can be computationally expensive, in exemplary embodiments, the SVD can be pre-computed by the processing circuitry for each conferencing matrix 155. For embodiments involving a dynamic conferencing matrix (e.g., a time-dependent matrix), multiple sets of SVDs can be pre-computed and then selected dynamically. For example, in a gaming environment, where the listener is wandering around a house in a virtual environment, there may be one SVD selected when the listener enters the living room and another SVD selected when the listener enters the kitchen.

Unlike the calculation of the listener vector, which must be computed in real-time at every sampling instance, the SVD need only be computed once every time there is a change in the conferencing matrix 155. For example, when a new participant joins the conference, the SVD may be computed during the short time interval that the participant is waiting to join the conference.

In another exemplary embodiment, in many cases, the participants in a generalized conference can be renumbered, and $C$ can subsequently be expressed in the form:

$$C = \begin{pmatrix} C_1 & 0 & .. & 0 \\ 0 & C_2 & .. & 0 \\ 0 & 0 & .. & C_M \end{pmatrix} \qquad \text{(Equation 19)}$$

where M is less than N. This form of $C$ will be referred to herein as a partitioned conferencing matrix.

For example, if there are 100 participants, it may be the case that one set of 40 participants are involved in a conference call, that is completely distinct from another conference call involving a second set of 35 participants, that is completely distinct from yet another conference call involving a third set of 25 participants. In this case, $C_1$ is of size 40x40, $C_2$ is of size 35x35 and $C_3$ is of size 25x25. Thus, instead of performing an SVD of the total 100x100 conferencing matrix $C$ and calculating linear combinations involving 100x1 vectors, the computation may instead be partitioned into three separate SVDs of $C_1$, $C_2$ and $C_3$ of size 40x40, 35x35 and 25x25, and three separate linear combinations involving vectors of size 40x1, 35x1 and 25x1, respectively. In effect, since participants in each set cannot hear or speak with participants in another set, the total conferencing matrix 155 can be partitioned into entirely separate constituent conferencing matrices. It should be noted that, for example, if a 41st participant joined the first set, and again had no coupling with participants in the other sets, $C_1$ would become a matrix of size 41x41, and only its SVD would need to be recalculated since there would be no change to $C_2$ or $C_3$.

In an exemplary implementation, the processing circuitry 110 implements an algorithm that seeks to renumber the participants so that the conferencing matrix $C$ takes on the partitioned form shown in Equation 19. In this way, the processing circuitry 110 partitions its computation into separate and distinct conference calls.

In the previous discussion, it was assumed that the values of $C$ are real-valued, and therefore, preferential treatment, or weighting, can be given to different speakers and listeners through suitable choice of the coefficients $C_{ij}$. However, in many cases, arbitrary real-valued coefficients in $C$ are not required, and simpler values of 1 and 0 can be used instead. For example, a value of $C_{ij} = 1$ means that the $j^{th}$ speaker will contribute to the audio heard by the $i^{th}$ listener (at time $n$), whereas a value of $C_{ij} = 0$ means that the $j^{th}$ speaker will not contribute to the audio heard by the $i^{th}$ listener (at time $n$). This special class of conferencing matrices having only 1's and 0's is referred to herein as a binary conferencing matrix.

Binary conferencing matrices can also be time-dependent, so that the presence of 1's and 0's within $C$ can depend on many time-dependent factors (i.e., policies 160), such as speaker preference, listener preference, conference server policies, time of day, day of week, who is actively speaking, etc. However, to simplify notation, the time dependence will be represented implicitly. In addition, binary conferencing matrices can potentially be partitioned, so that a single large binary conferencing matrix can be expressed as one or more constituent binary conferencing matrices, as shown in Equation 19, with $C_1$, $C_2$ ... $C_M$ having binary values.

In one embodiment, generalized conferencing using binary conferencing matrices can be implemented by calculating, for each listener $i$, the sum of all speakers having non-zero values in $\vec{c}_i^{\,T}$, i.e.:

$$l_i = \sum_{C_{ij} \neq 0} s_j \qquad \text{(Equation 20)}$$

That is, since the conferencing matrix 155 is binary, instead of forming a weighted sum of speakers, only the summation operation needs to be performed.

In another embodiment, since most of the speakers are typically not active, the conferencing computation can be further reduced as:

$$l_i = \sum_{C_{ij} \neq 0} active\_s_j \qquad \text{(Equation 21)}$$

by including only those active speakers within the summation operation.

The binary conferencing matrix can also be written in SVD form as:

$$C = U\Lambda V^T \qquad \text{(Equation 22)}$$

where the number of non-zero values in A corresponds to the rank of $C$. For example, consider the following conferencing matrix $C$:

$$C = \begin{pmatrix} 1 & 1 & 1 & 0 & 0 & 0 \\ 1 & 1 & 1 & 0 & 0 & 0 \\ 1 & 1 & 1 & 0 & 0 & 0 \\ 0 & 0 & 0 & 1 & 1 & 1 \\ 0 & 0 & 0 & 1 & 1 & 1 \\ 0 & 0 & 0 & 1 & 1 & 1 \end{pmatrix} \qquad \text{(Equation 23)}$$

Here, $C$ is a rank 2 matrix where:

$$\lambda_1^{1/2}\vec{v}_1^T = (1 \quad 1 \quad 1 \quad 0 \quad 0 \quad 0) \text{ and } \lambda_2^{1/2}\vec{v}_2^T = (0 \quad 0 \quad 0 \quad 1 \quad 1 \quad 1) \qquad \text{(Equation 24)}$$

and

$$\lambda_1^{1/2}\vec{u}_1 = (1 \quad 1 \quad 1 \quad 0 \quad 0 \quad 0)^T \text{ and } \lambda_2^{1/2}\vec{u}_2 = (1 \quad 1 \quad 1 \quad 0 \quad 0 \quad 0)^T \qquad \text{(Equation 25)}$$

so that:

$$\bar{l} = \lambda_1 \vec{u}_1 \vec{v}_1^T \bar{s} + \lambda_2 \vec{u}_1 \vec{v}_1^T \bar{s} \qquad \text{(Equation 26)}$$

The operation in Equation 26 is to form sums of the input speakers and to copy over a sum to each listener. The sum of the first three speakers is computed and copied over to each of the first three listeners, and the sum of the last three speakers is computed and copied over to the last three listeners. That is,

$$\bar{l} = \begin{pmatrix} 1 \\ 1 \\ 1 \\ 0 \\ 0 \\ 0 \end{pmatrix} (1 \quad 1 \quad 1 \quad 0 \quad 0 \quad 0)\vec{s} + \begin{pmatrix} 0 \\ 0 \\ 0 \\ 1 \\ 1 \\ 1 \end{pmatrix} (0 \quad 0 \quad 0 \quad 1 \quad 1 \quad 1)\vec{s} \qquad \text{(Equation 27)}$$

As another example, assume $C$ is:

$$C = \begin{pmatrix} 1 & 1 & 1 & 0 & 0 & 0 \\ 1 & 1 & 1 & 0 & 0 & 0 \\ 1 & 1 & 1 & 0 & 0 & 0 \\ 0 & 0 & 0 & 1 & 1 & 1 \\ 0 & 0 & 0 & 1 & 1 & 1 \\ 1 & 0 & 0 & 1 & 1 & 1 \end{pmatrix} \qquad \text{(Equation 28)}$$

which is similar to the first example in Equation 23, except for the presence of an additional 1 in $C_{61}$ that also increases the rank of C from 2 to 3. In this case, the SVD representation is given by:

$$\bar{l} = \begin{pmatrix} 0.39 & -0.41 & -0.9 \\ 0.39 & -0.41 & -0.9 \\ 0.39 & -0.41 & -0.9 \\ 0.36 & 0.43 & -0.42 \\ 0.36 & 0.43 & -0.42 \\ 0.52 & 0.32 & 0.78 \end{pmatrix} \begin{pmatrix} 3.2 & 0 & 0 \\ 0 & 2.87 & 0 \\ 0 & 0 & 0.65 \end{pmatrix} \begin{pmatrix} 0.53 & 0.36 & 0.36 & 0.39 & 0.39 & 0.39 \\ -0.32 & -0.43 & -0.43 & 0.41 & 0.41 & 0.41 \\ 0.78 & -0.42 & -0.42 & -0.09 & -0.09 & -0.09 \end{pmatrix} \vec{s}$$

$$\text{(Equation 29)}$$

Comparing this to Equation 27, it can be seen that the SVD for the second example has yielded a much more complicated expression for $\bar{l}$. Specifically, the linear combination of the speaker values are no longer simple summations, and there is no copy over operation. Thus, the SVD has produced a rank 3 representation that no longer contains 1's and 0's. This example demonstrates that the SVD of a binary conferencing matrix is not necessarily binary itself. Therefore, the computational simplicity of using only summations and copy over operations cannot be achieved for all binary conferencing matrices through the use of the SVD.

As can be seen, the essential difference between the binary conferencing matrix in Example 1 and the binary conferencing matrix in Example 2 is the non-orthogonality of the columns (or rows). For Example 1, in Equation 23, the columns are either identical, thereby not contributing to an increase in rank, or orthogonal to each other, so that the SVD representation contains only 1's and 0's, whereas for Example 2 in Equation 28, the columns are not orthogonal. Since the SVD must yield an orthogonal basis set, the SVD produces many real-valued values in order to accomplish this. In other words, although the SVD has reduced the number of linear combinations required, these linear combinations now require general real-valued multiplication operations instead of simply summations, thereby increasing the computational demands on the processing circuitry 110.

Nonetheless, the presence of 1's and 0's in the binary conferencing matrix suggests that there may be another type of representation, such as a subspace binary conferencing matrix, that exploits the low rank of C in order to reduce computation, so that all linear combinations of speaker values are achieved using purely summation operations. It can be seen in the following discussion that although such representations use simple summation of speaker signals, the copy-over operation should be generalized to an accumulation operation, involving simple additions and subtractions, to derive the listener signals.

To derive the subspace binary conferencing matrix representation, the matrix C is expressed as the product of two matrices:

$$C = DP^T \qquad \text{(Equation 30)}$$

where $P^T$ is of size *RxN, R* is the rank of C and $P^T$ contains only 1's and 0's. When applied to an *Nx1* speaker vector, the *RxN* matrix $P^T$ produces a vector that resides in an *R*-dimensional subspace, instead of in the full *N*-dimensional space. Since $P^T$ contains only 1's and 0's, this subspace processing operation is achieved using only summations of the speaker signals. In other words, with subspace binary conferencing matrix processing:

$$\vec{l}_c = P^T \vec{s} \qquad \text{(Equation 31)}$$

and

$$\vec{l} = D\vec{l}_c \qquad \text{(Equation 32)}$$

where the subspace vector $\vec{l}_c$ is an *Rx1* vector and is the result of performing a set of R summation operations applied to the elements in the speaker vector $\vec{s}$. When each linear combination, i.e., summation operation, multiplies its corresponding column of D and the resultant vectors are added, the total listener vector is formed.

It should be noted that since each row of *D* may have multiple 1's (or -1's), each element in the listener vector is not necessarily derived by simply copying over a single element of $\vec{l}_c$. Rather, one or more elements of $\vec{l}_c$ should be accumulated, i.e., added or subtracted, in order to derive each element in $\vec{l}$.

In order to derive the matrix D, both sides of Equation 30 are post-multiplied by P(P^TP)^-1, so that:

$$CP(P^T P)^{-1} = D \qquad \text{(Equation 33)}$$

Substituting Equation 33 into Equation 30 yields:

$$C = CP(P^T P)^{-1} P^T \qquad \text{(Equation 34)}$$

The matrix $P(P^TP)^{-1}P^T$ can be seen as a subspace projection matrix. Essentially, what Equation 34 is saying is that applying *C* to any speaker vector that is projected onto the null-perpendicular space of *C* is the same as applying *C* to the speaker vector itself.

It should be noted that it is not always possible to determine the matrix *D* for an arbitrary choice of $P^T$, i.e., to represent *C* as shown in Equations 30 and 34. First, the matrix $P^TP$ must be invertible, i.e., *the R* columns *of P* must be linearly independent. Second, the range-space of $P$ must be identical to the null-space of $C$. Otherwise, some specific speaker vectors will not yield a contribution to the listener vector using the representation in Equation 30, whereas they would using only $C$, i.e., Equation 34 is only true if the range-space of $P$ matches the null-perpendicular space of $C$.

The range-space of $P$ matching the null-perpendicular space of $C$ also implies that the range-space of $P$ matches the range-space of $C^T$. That is, the space spanned by the columns of $P$ must match the space spanned by the columns of $C^T$, which in turn implies that the space spanned by the rows of $P^T$ must match the space spanned by the rows of $C$. In other words, a suitable choice for a row of $P^T$ is some linear combination of any $R$ linearly independent rows of $C$. One such linear combination is identically a row of $C$ itself, i.e., the linear combination is unity. Therefore, a suitable choice for the rows of $P^T$ are $R$ linearly independent rows of $C$ itself. In this case, $P^T$ is an $RxN$ matrix containing only 1's and 0's. For example, if $R = 2$:

$$\vec{l} = \vec{d}_1 \vec{p}_1^T \vec{s} + \vec{d}_2 \vec{p}_2^T \vec{s} = \vec{d}_1 l_{c1} + \vec{d}_2 l_{c2} \qquad \text{(Equation 35)}$$

where $l_{c1}$ and $l_{c2}$ are the summation operations, i.e., linear combinations containing only 1's and 0's, performed on the speaker vector, since the elements of $\vec{p}_1$ and $\vec{p}_2$ are 1's and 0's.

To understand the relationship between the subspace binary conferencing matrix and the SVD of $C$, $C$ can be written in its SVD form as:

$$C = U \Lambda V^T = \tilde{U} A \Lambda B \tilde{V}^T \qquad \text{(Equation 36)}$$

where $U$ represents the set of orthogonal vectors that span the range of $C$, $V$ represents the set of orthogonal vectors that span the range of $C^T$, $\tilde{U}$ represents some set of linearly independent vectors that span the range of $C$ but are not necessarily orthogonal, and $\tilde{V}$ represents some set of linearly independent vectors that span the range of $C^T$ but are not necessarily orthogonal. Then,

$$C = \tilde{U} E \tilde{V}^T \qquad \text{(Equation 37)}$$

which resembles the form of the SVD except that the $RxR$ matrix $E$ is not necessarily diagonal. Comparing this to Equation 34, it can be seen that:

$$\tilde{U} = CP(P^T P)^{-1} = D \qquad \text{(Equation 38)}$$

and

$$E \tilde{V}^T = P^T \qquad \text{(Equation 39)}$$

The above represents $C$ in a non-SVD rank R manner, such that the linear combinations of the speaker signals are purely summation operations. The matrix $D$ represents the accumulation operations that must be performed on these summations to derive each element of the listener vector.

In the subspace binary conferencing matrix embodiment, the processing circuitry 110 implements the following algorithm: (1) compute $R$ summation operations $\vec{l}_c = P^T \vec{s}$, where the rows of $P^T$ represent any set of $R$ linearly independent rows of $C$, (2) form a weighted sum of the listener vectors $\vec{l} = D\vec{l}_c$. It can be shown that the matrix $D$

contains only the values of 1, -1 or 0. To see this, both sides of Equation 30 can be transposed so that

$$C^T = PD^T \qquad \text{(Equation 40)}$$

Since $P$ contains only 1's and 0's, if $D$ contained something other than 1, -1 or 0, $C^T$ would no longer contain only 1's and 0's. Therefore, in an exemplary embodiment, the calculation of the listener vector can be formed as follows: (1) compute $R$ summation operations $\vec{l}_c = P^T \vec{s}$, where the rows of $P^T$ represent any set of R linearly independent rows of $C$, (2) for each listener signal i, add or subtract (dependent upon the $j^{th}$ value of 1 or -1 in the $i^{th}$ row of $D$) the corresponding $j^{th}$ value of $\vec{l}_c$. In another exemplary embodiment, step (1) above is performed for only active speakers.

For illustration purposes, consider the conferencing matrix in Equation 28 that yielded the complex non-binary SVD representation. This matrix is rank 3. A subspace matrix $P^T$ is created by selecting 3 linearly independent rows of $C$. If one selects rows 1, 4 and 6, the 3x6 subspace projection matrix becomes:

$$P^T = \begin{pmatrix} 1 & 1 & 1 & 0 & 0 & 0 \\ 0 & 0 & 0 & 1 & 1 & 1 \\ 1 & 0 & 0 & 1 & 1 & 1 \end{pmatrix} \qquad \text{(Equation 41)}$$

Using Equation 33 above, the 6x3 matrix $D$ is computed yielding:

$$D = \begin{pmatrix} 1 & 0 & 0 \\ 1 & 0 & 0 \\ 1 & 0 & 0 \\ 0 & 1 & 0 \\ 0 & 1 & 0 \\ 0 & 0 & 1 \end{pmatrix} \qquad \text{(Equation 42)}$$

so that the subspace binary conferencing matrix becomes:

$$\vec{l} = C\vec{s} = DP^T \vec{s} = \begin{pmatrix} 1 & 0 & 0 \\ 1 & 0 & 0 \\ 1 & 0 & 0 \\ 0 & 1 & 0 \\ 0 & 1 & 0 \\ 0 & 0 & 1 \end{pmatrix} \begin{pmatrix} 1 & 1 & 1 & 0 & 0 & 0 \\ 0 & 0 & 0 & 1 & 1 & 1 \\ 1 & 0 & 0 & 1 & 1 & 1 \end{pmatrix} \vec{s} \qquad \text{(Equation 43)}$$

It should be noted that even though the columns of $C$ are not orthogonal, the computation requires only sums of the speaker values, and the listener values are derived through simple accumulation operations. For this example, the accumulations involve only 1's and not -1's, that is, $D$ contains only 1's and 0's. In fact, the listener vector can be formed using simple copy-over operations.

Next, consider a more complex example of the subspace binary conferencing matrix such that:

$$C = \begin{pmatrix} 0 & 0 & 0 & 1 & 0 & 0 & 0 \\ 1 & 1 & 1 & 1 & 0 & 0 & 1 \\ 1 & 1 & 1 & 0 & 0 & 0 & 1 \\ 1 & 1 & 0 & 1 & 1 & 1 & 1 \\ 0 & 0 & 0 & 1 & 1 & 1 & 0 \\ 0 & 0 & 0 & 1 & 1 & 1 & 0 \\ 1 & 1 & 1 & 1 & 1 & 1 & 1 \end{pmatrix} \qquad \text{(Equation 44)}$$

This matrix is rank 4. A subspace matrix $P^T$ is formed by selecting any 4 linearly independent rows of $C$. For example, selecting rows 1, 2, 4 and 5, the subspace matrix is:

$$P^T = \begin{pmatrix} 0 & 0 & 0 & 1 & 0 & 0 & 0 \\ 1 & 1 & 1 & 1 & 0 & 0 & 1 \\ 1 & 1 & 0 & 1 & 1 & 1 & 1 \\ 0 & 0 & 0 & 1 & 1 & 1 & 0 \end{pmatrix} \qquad \text{(Equation 45)}$$

Computing $D$ using Equation 33 yields:

$$D = \begin{pmatrix} 1 & 0 & 0 & 0 \\ 0 & 1 & 0 & 0 \\ -1 & 1 & 0 & 0 \\ 0 & 0 & 1 & 0 \\ 0 & 0 & 0 & 1 \\ 0 & 0 & 0 & 1 \\ -1 & 1 & 0 & 1 \end{pmatrix} \qquad \text{(Equation 46)}$$

so that the subspace binary conferencing matrix becomes:

$$\bar{l} = C\bar{s} = DP^T\bar{s} = \begin{pmatrix} 1 & 0 & 0 & 0 \\ 0 & 1 & 0 & 0 \\ -1 & 1 & 0 & 0 \\ 0 & 0 & 1 & 0 \\ 0 & 0 & 0 & 1 \\ 0 & 0 & 0 & 1 \\ -1 & 1 & 0 & 1 \end{pmatrix} \begin{pmatrix} 0 & 0 & 0 & 1 & 0 & 0 & 0 \\ 1 & 1 & 1 & 1 & 0 & 0 & 1 \\ 1 & 1 & 0 & 1 & 1 & 1 & 1 \\ 0 & 0 & 0 & 1 & 1 & 1 & 0 \end{pmatrix} \bar{s} \qquad \text{(Equation 47)}$$

The computation requires only sums of speaker values, and the listener values are derived through simple accumulations involving both 1's and -1's. For example, listener 7's value is derived by subtracting the first summation of speaker values (determined by the first row of $P^T$) and adding this result to the fourth summation of speaker values (determined by the fourth row of $P^T$).

Considering now the diagonal elements $C_{ij}$ of the conferencing matrix $C$, these represent the volume level at which the $i^{th}$ speaker hears himself. In general, it is desirable to prevent the $i^{th}$ speaker from hearing himself, and therefore, it is preferable that the diagonal elements of the conferencing matrix or binary conferencing matrix be set to zero. However, including values of 1 along the diagonal can reduce the rank of a binary $C$ in many cases, thereby reducing computation complexity. For example, consider a case where:

$$C = \begin{pmatrix} 0 & 1 & 1 & 0 & 0 & 0 \\ 1 & 0 & 1 & 0 & 0 & 0 \\ 1 & 1 & 0 & 0 & 0 & 0 \\ 0 & 0 & 0 & 0 & 1 & 1 \\ 0 & 0 & 0 & 1 & 0 & 1 \\ 0 & 0 & 0 & 1 & 1 & 0 \end{pmatrix} \qquad \text{(Equation 48)}$$

In this case, participants 1-3 are in a conference together, and participants 4-6 are in a conference together, and each speaker cannot hear himself. The rank of this binary conferencing matrix is 6 for this simple two conference room scenario. Now, consider a second case where:

$$C = \begin{pmatrix} 1 & 1 & 1 & 0 & 0 & 0 \\ 1 & 1 & 1 & 0 & 0 & 0 \\ 1 & 1 & 1 & 0 & 0 & 0 \\ 0 & 0 & 0 & 1 & 1 & 1 \\ 0 & 0 & 0 & 1 & 1 & 1 \\ 0 & 0 & 0 & 1 & 1 & 1 \end{pmatrix} \qquad \text{(Equation 49)}$$

In this second case, participants 1-3 are again in a conference together and participants 4-6 are again in a conference together, but now each speaker hears himself. The rank of this binary conferencing matrix is 2. These examples suggest that if the results of $C\vec{s}$, where $C$ includes unity elements on its diagonal, can be post-processed, we can derive computational benefits from the reduced rank of $C$ without producing a disturbing echo signal. In an exemplary embodiment, the following algorithm can be used to reduce the rank of $C$: (1) compute $\vec{l} = C\vec{s}$, where $C$ has a unity-valued diagonal, (2) post-process $\vec{l}$ by subtracting $\vec{s}$, , i.e., $\vec{l} = \tilde{l} - \vec{s}$.

However, it should be noted that the rank of $C$ is not always reduced by simply setting all of its diagonal elements to unity. For example, consider the following binary conferencing matrix:

$$C = \begin{pmatrix} 1 & 1 & 1 & 0 & 0 & 0 & 0 \\ 1 & 1 & 1 & 0 & 0 & 0 & 0 \\ 1 & 1 & 1 & 0 & 0 & 0 & 0 \\ 0 & 0 & 0 & 1 & 1 & 1 & 0 \\ 0 & 0 & 0 & 1 & 1 & 1 & 0 \\ 0 & 0 & 0 & 1 & 1 & 1 & 0 \\ 1 & 1 & 1 & 1 & 1 & 1 & 1 \end{pmatrix} \qquad \text{(Equation 50)}$$

which is rank 4 when all of the diagonal elements of $C$ are set to unity. However, the rank of $C$ can actually be reduced to 3 by setting $C_{77} = 0$, so that:

$$C = \begin{pmatrix} 1 & 1 & 1 & 0 & 0 & 0 & 0 \\ 1 & 1 & 1 & 0 & 0 & 0 & 0 \\ 1 & 1 & 1 & 0 & 0 & 0 & 0 \\ 0 & 0 & 0 & 1 & 1 & 1 & 0 \\ 0 & 0 & 0 & 1 & 1 & 1 & 0 \\ 0 & 0 & 0 & 1 & 1 & 1 & 0 \\ 1 & 1 & 1 & 1 & 1 & 1 & 0 \end{pmatrix} \qquad \text{(Equation 51)}$$

The reduction in rank is evident since the last row is now seen to consist of a linear combination of the first row and the fourth row. Equivalently, the reduction in rank is evident since the rightmost column of $C$ is not identically zero and thereby the rank of $C$ is reduced by 1.

In general, either a 1 or a 0 must be selected for each diagonal element of $C$, in order to reduce its rank. If necessary, post-processing can ensure that the speakers do not hear themselves. The post-processing operation is to:

(1) subtract off $s_i$ from the $i^{th}$ element of $\overrightarrow{Cs}$, $l_i$, if a 1 was included in the $ii^{th}$ element of $C$, (2) otherwise, leave the $i^{th}$ element $l_i$ intact. Thus, either a 1 or a 0 can be selected for each diagonal element, and the resultant $\overrightarrow{Cs}$ can always be post-processed to yield $\overrightarrow{l}$.

One criteria for selecting the values of the diagonal elements is to seek to produce a $C$ that is of minimum rank to minimize computation. In one embodiment, one algorithm for determining the lowest rank $C$ consists of evaluating the rank of each of the $2^N$ possible binary conferencing matrices with each diagonal element set to either a 1 or a 0, and then selecting the matrix $C$ that has the lowest rank. In other words, this algorithm examines all possible choices of $C$ with its diagonal elements set to 1 or 0 and selects the choice which yields the lowest rank. If multiple possibilities yield the same lowest rank, any of those choices for C can be used.

In another embodiment, a heuristic algorithm can be used that reduces the computation for determining the lowest rank $C$ by seeking to select a choice of $C$ that has a reduced, but not necessarily minimum, rank. An example of a heuristic algorithm includes: (1) set the $ii^{th}$ element of $C$ to 0, if the other elements of the $i^{th}$ row are zero, (2) set the $ii^{th}$ element of $C$ to 0, if the other elements of the $i^{th}$ column are zero, (3) set the $ii^{th}$ element of $C$ to 1 or 0, if doing so makes the $i^{th}$ row match some other row, (4) set the $ii^{th}$ element of $C$ to 1 or 0, if doing so makes the $i^{th}$ column match some other column.

Using the generalized conferencing matrix format, it is also possible to represent conventional conferencing scenarios. For example, consider the conventional conferencing scenario of two conference rooms, CR1 and CR2, where participants 1-3 hear and speak to each other in CR1 and participants 4-6 hear and speak to each other in CR2. This can be represented with a binary conferencing matrix as:

$$C = \begin{pmatrix} 1 & 1 & 1 & 0 & 0 & 0 \\ 1 & 1 & 1 & 0 & 0 & 0 \\ 1 & 1 & 1 & 0 & 0 & 0 \\ 0 & 0 & 0 & 1 & 1 & 1 \\ 0 & 0 & 0 & 1 & 1 & 1 \\ 0 & 0 & 0 & 1 & 1 & 1 \end{pmatrix}$$   (Equation 52)

As a second example, consider the conventional scenario of participants 1, 2, 3 and 7 in R1 and participants 4, 5 and 6 in CR2, the binary conferencing matrix can be written as:

$$C = \begin{pmatrix} 1 & 1 & 1 & 0 & 0 & 0 & 1 \\ 1 & 1 & 1 & 0 & 0 & 0 & 1 \\ 1 & 1 & 1 & 0 & 0 & 0 & 1 \\ 0 & 0 & 0 & 1 & 1 & 1 & 0 \\ 0 & 0 & 0 & 1 & 1 & 1 & 0 \\ 0 & 0 & 0 & 1 & 1 & 1 & 0 \\ 1 & 1 & 1 & 0 & 0 & 0 & 0 \end{pmatrix}$$   (Equation 53)

It should be noted that for conventional conferencing, if all participants are un-muted and un-held, it is always possible to renumber the participants so that the binary conferencing matrix can be represented as a block diagonal matrix $C$. In this example, if the participants are renumbered so that participant 4 and participant 7 are interchanged, the binary conferencing matrix becomes:

$$C = \begin{pmatrix} 1 & 1 & 1 & 1 & 0 & 0 & 0 \\ 1 & 1 & 1 & 1 & 0 & 0 & 0 \\ 1 & 1 & 1 & 1 & 0 & 0 & 0 \\ 1 & 1 & 1 & 1 & 0 & 0 & 0 \\ 0 & 0 & 0 & 0 & 1 & 1 & 1 \\ 0 & 0 & 0 & 0 & 1 & 1 & 1 \\ 0 & 0 & 0 & 0 & 1 & 1 & 1 \end{pmatrix}$$   (Equation 54)

which is seen to be block-diagonal. In addition, when the binary conferencing matrix represents a conventional conference with all participants un-muted and un-held, it has a unity-valued diagonal and the associated speaker signal is subtracted from each listener so that each speaker does not hear himself.

It should be noted that conventional conferences can also be represented by the binary conferencing matrix when some or all participants are held or muted. For example,

$$C = \begin{pmatrix} 1 & 1 & 0 & 0 & 0 & 0 \\ 1 & 1 & 0 & 0 & 0 & 0 \\ 1 & 1 & 0 & 0 & 0 & 0 \\ 0 & 0 & 0 & 1 & 1 & 1 \\ 0 & 0 & 0 & 1 & 1 & 1 \\ 0 & 0 & 0 & 1 & 1 & 1 \end{pmatrix} \qquad \text{(Equation 55)}$$

represents a conference server having two conference rooms CR1 and CR2, where participants 1 and 2 hear and speak to each other in CR1, participants 4-6 hear and speak to each other in CR2 and participant 3 is presently muted. Similarly,

$$C = \begin{pmatrix} 1 & 1 & 0 & 0 & 0 & 0 \\ 1 & 1 & 0 & 0 & 0 & 0 \\ 0 & 0 & 0 & 0 & 0 & 0 \\ 0 & 0 & 0 & 1 & 1 & 1 \\ 0 & 0 & 0 & 1 & 1 & 1 \\ 0 & 0 & 0 & 1 & 1 & 1 \end{pmatrix} \qquad \text{(Equation 56)}$$

represents the same conference room where participant 3 is on hold. That is, participant 3 hears no one (the third row of $C$ is zero), and no one hears participant 3 (the third column of $C$ is zero).

In some conventional conferencing systems, whisper rooms are also supported, where two or more participants are participating in a sidebar conference, while simultaneously listening in to the main conference. Generalized conferencing can also be used to represent whisper rooms. For example, the 6x6 binary conferencing matrix below represents a 4-party conference where participants 3 and 4 are in a whisper room together:

$$C = \begin{pmatrix} 1 & 1 & 0 & 0 & 0 & 0 \\ 1 & 1 & 0 & 0 & 0 & 0 \\ 1 & 1 & 1 & 1 & 0 & 0 \\ 1 & 1 & 1 & 1 & 0 & 0 \\ 0 & 0 & 0 & 0 & 0 & 0 \\ 0 & 0 & 0 & 0 & 0 & 0 \end{pmatrix} \qquad \text{(Equation 57)}$$

That is, participants 1 and 2 speak and hear each other, participants 3 and 4 also hear participants 1 and 2, but participants 3 and 4 are able to speak, i.e., whisper, to each other without participants 1 and 2 hearing them.

Given this, it is evident that conventional conferences, including conferences with participants who are muted, held or in whisper rooms can always be represented with a block diagonal, or almost block-diagonal, binary conferencing matrix. Generalized conferences, in contrast, do not necessarily have binary conferencing matrices that can be written in block diagonal, or almost block-diagonal format. That is, in a generalized conference, any element of C can be a 1 or a 0, thereby allowing a participant to listen in on multiple conference rooms, speak in multiple conference rooms or any combination thereof.

Following are several examples of generalized conferencing scenarios that cannot be represented in conventional conference bridges. In a first example, consider a three-party generalized conference where:

$$C = \begin{pmatrix} 1 & 0 & 1 \\ 0 & 1 & 1 \\ 1 & 1 & 1 \end{pmatrix} \qquad \text{(Equation 58)}$$

In this representation, participant 3 is the moderator, i.e., a go-between for participants 1 and 2. That is, participant 3 can speak and listen to participants 1 and 2, but participants 1 and 2 cannot speak to or hear each other.

In a second example, consider another three-party generalized conference where:

$$C = \begin{pmatrix} 1 & 1 & 1 \\ 1 & 1 & 0 \\ 1 & 1 & 1 \end{pmatrix} \qquad \text{(Equation 59)}$$

In this representation, participant 3 is an advisor to participant 1. That is, participant 3 hears the two-way conversation between participants 1 and 2, but when participant 3 speaks, he is heard by only participant 1.

In a third example, consider yet another three-party generalized conference where:

$$C = \begin{pmatrix} 1 & 1 & 0 \\ 1 & 1 & 0 \\ 1 & 1 & 1 \end{pmatrix} \qquad \text{(Equation 60)}$$

In this representation, participant 3 is eavesdropping on participants 1 and 2. This case is similar to conventional conferencing, where participant 3 is in the conference but muted. However, the difference between the generalized eavesdropping and the conventional conference muted participant becomes evident when the eavesdropper is listening in to multiple conference rooms, such as in the following representation:

$$C = \begin{pmatrix} 1 & 1 & 0 & 0 & 0 \\ 1 & 1 & 0 & 0 & 0 \\ 0 & 0 & 1 & 1 & 0 \\ 0 & 0 & 1 & 1 & 0 \\ 1 & 1 & 1 & 1 & 1 \end{pmatrix} \qquad \text{(Equation 61)}$$

Here, participant 5 is eavesdropping on CR1 and CR2. This generalized conference is not possible in existing conference bridge systems, and is of importance in security and monitoring scenarios, where, for example, participant 5 might take action dependent upon what is said in either of the two conference rooms.

In a fourth example, consider still another three-party generalized conference where:

$$C = \begin{pmatrix} 1 & 1 & 1 \\ 1 & 1 & 1 \\ 0 & 0 & 1 \end{pmatrix} \qquad \text{(Equation 62)}$$

In this representation, participant 3 is an announcer who talks to participants 1 and 2 who are in a conference together, but this announcer is unable to hear the participants who may be having a private discussion.

Although some examples of the possible ways three people can participate in a generalized conference have been described herein, these are just a few of the many possibilities. For example, consider a binary conferencing matrix of:

$$C = \begin{pmatrix} 1 & a & b \\ c & 1 & d \\ e & f & 1 \end{pmatrix} \qquad \text{(Equation 63)}$$

where each of the six parameters $a$-$f$ may take on a value of 0 or 1, and the diagonal elements of $C$ are set to unity, without loss of generality. There are a total of $2^6$ possible choices for $C$ corresponding to 64 different ways 3 participants may participate with each other in a generalized conference. The number of generalized conferencing scenarios grows quickly as the number of participants increases. For example, for 6 participants, there are $2^{28}$, or about 300 million, possible ways in which they might participate in a generalized conference.

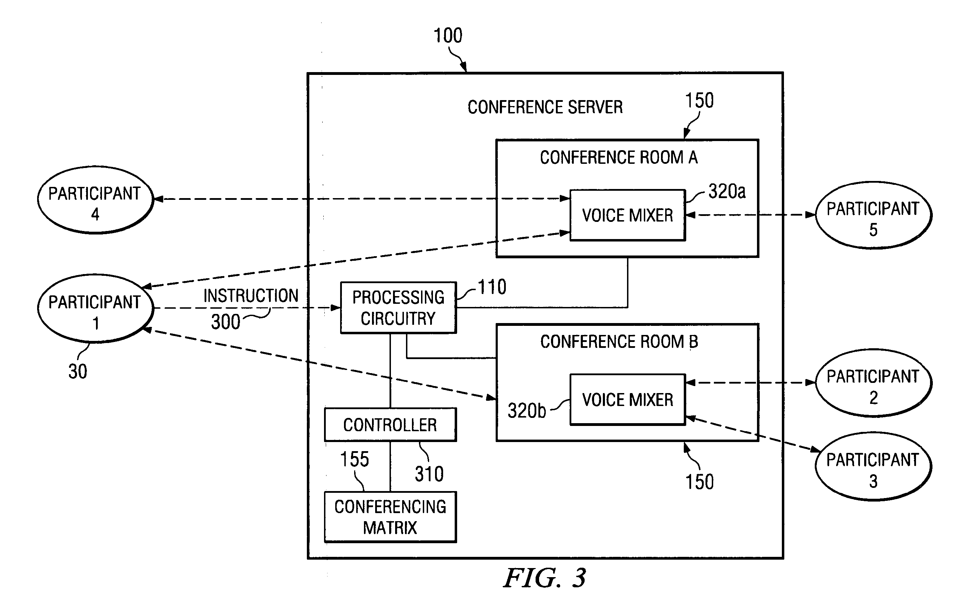

Turning now to FIGURE 3, an exemplary operation of the conference server 100 to control participant voice mixing states of conference rooms 150 is illustrated in accordance with embodiments of the present invention. The conference server 100 includes processing circuitry 110, a matrix controller 310, a conferencing matrix 155 and multiple conference rooms 150, of which two are shown (Conference Room A and Conference Room B). Each conference room 150 is responsible for managing a different conference call involving different sets of participants 30. For example, Conference Room A is managing a conference call between Participant 1, Participant 4 and Participant 5, while Conference Room B is managing a conference call between Participant 1, Participant 2 and Participant 3.

Each conference room 150 includes a voice mixer 320 that operates to produce a particular combination of speech for each participant based on the voice mixing state of the conference room 150. The voice mixing state of one or more conference rooms is determined based on the coefficients of the conferencing matrix 155. For example, the conferencing matrix 155 can indicate whether voice originated by a particular speaking participant is to be muted or un-muted for one or more listening participants. In an exemplary embodiment, the processing circuitry 110 accesses the matrix controller 310 to retrieve the applicable coefficients from the conferencing matrix 155 for a particular conference room 150 and provides the retrieved coefficients to that conference room 150 for proper voice mixing for each participant. More specifically, the processing circuitry 110 can determine the weights (or gains) to be applied to each input voice signal for a particular conference room 150 from the matrix 155 coefficients, and then provide these weights to the voice mixer 320 to enable the voice mixer 320 to correctly mix the input voice signals and produce the desired individualized mixed output voice to each listening participant in the conference room 150.

The processing circuitry 110 also operates with the matrix controller 310 to set the coefficient values of the conferencing matrix 155 based on conferencing policies, as described above. For example, in an exemplary embodiment, the processing circuitry 110 accesses pre-stored policies, and provide the policies to the matrix controller 310 to enable the matrix controller 310 to set the coefficient values of the conferencing matrix 155. In another exemplary embodiment, the processing circuitry 110 can receive an instruction 300 from a participant 30 that includes a new policy, and can provide the new policy to the matrix controller 310 for use by the matrix controller 310 in setting the coefficient values of the conferencing matrix 155. For example, the instruction 300 may be an instruction to add or remove participants from one or more conference calls, to set participant preferences for the conference call or to override other participant preferences for the conference call.

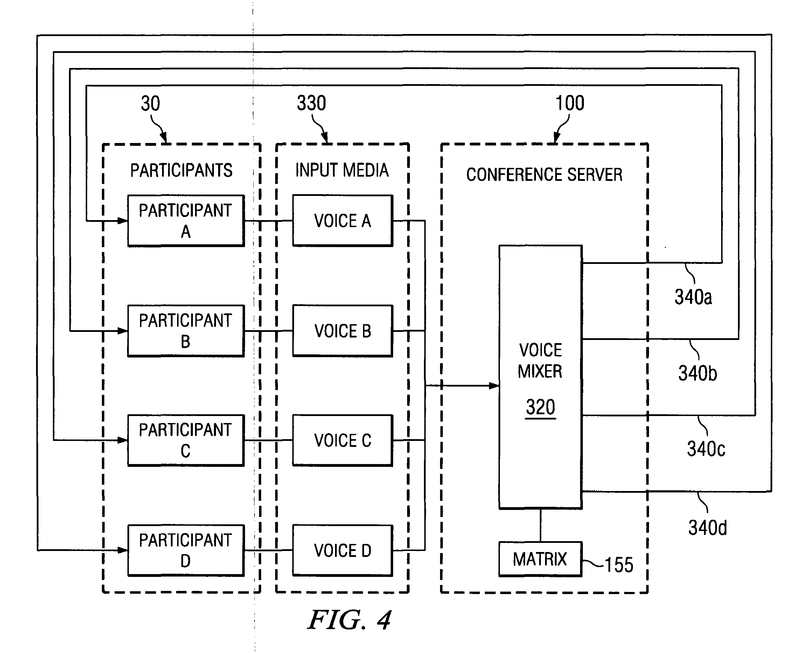

FIGURE 4 illustrates an exemplary voice mixing operation of a conference room 150 in accordance with embodiments of the present invention. In FIGURE 4, multiple participants 30 (A, B, C and D) are engaged in one or more conference calls via the conference server 100 and are coupled to transmit respective input voice 330 to the conference server 100 and receive output voice 340 from the conference server 100. As described above, the conference server 100 includes a voice mixer 320 that operates to mix the input voice 330 received from all participants 30 based on the conferencing matrix 155 and transmit the mixed voice 340 back out to the participants. More specifically, the voice mixer 320 operates to mix the input voice 330 individually for each participant 30 (Participant A, Participant B, Participant C and Participant D) to produce respective mixed voice outputs 340a, 340b, 340c and 340d, and to provide the respective mixed voice outputs 340a, 340b, 340c and 340d to the appropriate participants.

Thus, as shown in FIGURE 4, the voice mixer 320 is coupled to receive the input voice signals 330 (Voice A, Voice B, Voice C and Voice D) from all of the conference participants (Participant A, Participant B, Participant C and Participant D) and is operable to access the conferencing matrix 155 to determine what gain, if any, to apply to each input voice signal 330 for each listening conference participant 30. Based on the respective gains, the voice mixer 320 further operates to produce a linear combination of the received input voice signals 330 as the output voice signal 340 provided to the respective conference participant 30.

For example, if during the conference call, the conference server 100 simultaneously receives voice signals from Participant A (Voice A), Participant C (Voice C) and Participant D (Voice D), the voice mixer 320 accesses the conferencing matrix 155 to determine the weights (or gains) to be applied to each input voice signal for Participant A, and based on the gains, mixes Voice A, Voice C and Voice D to produce output voice signal 340a that is provided to Participant A. Similarly, the voice mixer 320 also accesses the conferencing matrix 155 to determine the weights (or gains) to be applied to each input voice signal for Participants B, C and D, respectively, and based on the gains, mixes Voice A, Voice C and Voice D to produce output voice signals 340b, 340c and 340d that are provided to Participants B, C and D, respectively.

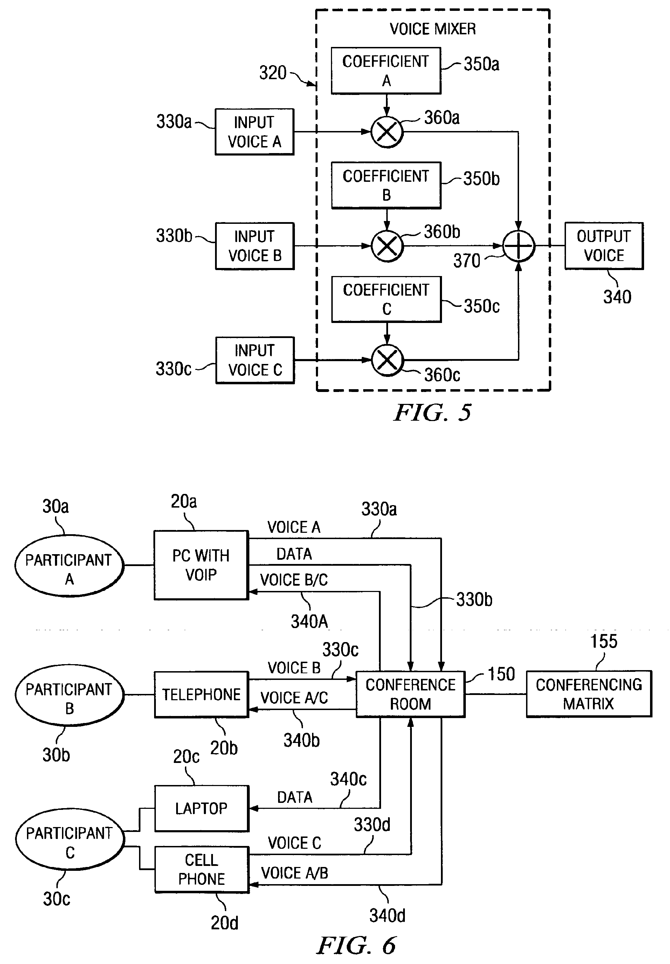

To more clearly explain the operation of the voice mixer 320, reference is now made to FIGURE 5. As shown in FIGURE 5, input voice signals from three speaking participants, labeled Input Voice A 330a, Input Voice B 330b and Input Voice C 330c, are provided to the voice mixer 320. The voice mixer 320 retrieves from the conferencing matrix the coefficients associated with each input voice signal for a particular listening participant, labeled Coefficient A 350a, Coefficient B 350b and Coefficient C, 350c. The voice mixer 320 further multiplies, via respective multipliers 360a, 360b and 360c, each input voice signal 330a, 330b and 330c by the respective coefficient 350a, 350b and 350c to produce weighted voice signals to a summation node 370. The summation node 370 adds together the weighted voice signals to produce the mixed output voice signal 340 that is output to that particular listening participant.

FIGURE 6 illustrates another exemplary operation of a conference room, where each participant 30 is associated with one or more communications devices 20. Each communications device 20 is communicatively coupled to the conference server 100 via one or more networks (not shown, for simplicity). Examples of networks include a local area network (LAN), a wide area network (WAN), a privately managed internet protocol (IP) data network, an Internet-based virtual private network (VPN), a public Internet-based IP data network, a Public Switched Telephone Network (PSTN), a Public Land Mobile Network (PLMN), and/or any other type or combination of packet-switched or circuit-switched networks.

In FIGURE 6, Participant A 30a is associated with a personal computer (PC) with VoIP 20a, Participant B 30b is associated with a telephone 20b and Participant C 30c is associated with a laptop computer 20c and a cell phone 20d. Each communications device 20a-20d is capable of receiving voice and/or data from other communications devices 20a-20d via the conference room 150. For example, Participant A speaks into the microphone connected to the PC 20a to provide input voice 330a (Voice A) to the conference room 150, Participant B speaks into the telephone 20b to provide input voice 330c (Voice B) to the conference room 150, and Participant C speaks into the cell phone 20d to provide input voice 330d (Voice C) to the conference room 150.

Upon receipt of voice from one or more participants, the conference room 150 mixes the received voice and provides the mixed or combined voice back out to the communications devices 20a-20d, based on the coefficients of the conferencing matrix 155. For example, assuming all participants are un-muted to each other and equally weighted, if the conference room 150 simultaneously receives voice from VoIP personal computer 20a, telephone 20b and cell phone 20d, the conference room 150 combines the voice and outputs the combined voice 340 to each of the participants. To avoid echoes, the conference room 150 transmits only Voice B/C 340a to the PC 20a, transmits only Voice A/C 340b to the telephone 20b and transmits only Voice A/B 340d to the cell phone 20d.

For data conferencing/collaboration, the conference room 150 is capable of receiving data (input Data) 330b from the personal computer 20a associated with Participant A 30a. The input data may include text and multi-media that provides a number of different data conferencing services, such as instant messaging, presentation sharing, desktop sharing and video. Input data 330b received from the VoIP personal computer 20a is output by the conference room 150 to the laptop computer 20c of Participant C 30c as output data 340c. In scenarios where the conference room 150 simultaneously receives voice and data from communications devices 350 other than the VoIP personal computer 20a, the conference room 150 combines the received voice and data and transmits the combined voice and data to the VoIP personal computer 20a.

FIGURE 7 is a flowchart illustrating an exemplary process 700 for implementing generalized conferencing, in accordance with embodiments of the present invention. The process begins at step 710, where a conferencing matrix of conference participants is provided. More particularly, the conferencing matrix is a matrix of input conference participants to output conference participants. Thus, at step 720, each of the matrix coefficients is set to a real value that collectively defines a desired output for each conference participant based on inputs from the other conference participants.

Once the conference matrix values are set, the process continues at step 730, where input media is received from conference participants. At step 740, the conferencing matrix is used to determine the individualized output media to be provided to each conference participant based on the received input media. The process ends at step 750, where the desired individualized output media is provided to each conference participant.

As will be recognized by those skilled in the art, the innovative concepts described in the present application can be modified and varied over a wide rage of applications. Accordingly, the scope of patents subject matter should not be limited to any of the specific exemplary teachings discussed, but is instead defined by the following claims.

**Claims**

1. A conference server (100), comprising:

an interface (190) communicatively coupled to a plurality of media devices operated by conference participants (30);

a conferencing module (140) operable to manage one or more conference calls by maintaining a conferencing matrix (155) of said conference participants (30) to said conference calls, said conferencing matrix (155) defining a respective output media provided to each of said conference participants (30) based on respective input media received from other ones of said conference participants (30); and

processing circuitry (110) operable to control said conferencing module and coupled to receive said input media from said conference participants (30) via said interface (190) and provide said input media to said conferencing module (140) and coupled to receive said output media from said conferencing module (140) and provide to said output media to said conference Participants (30) via said interface (190), the server **characterized by** comprising coefficients of said conferencing matrix (155) which are determined based on one or more pre-stored conference policies.

2. The conference server of Claim 1, wherein each of said coefficients defines a gain to be applied to voice streams associated with a particular speaking one of said conference participants (30) as heard by a particular listening one of said conference participants (30), and wherein each of said coefficients of said conferencing matrix (155) indicates whether voice originated by said respective speaking one of said conference participants (30) is to be muted or un-muted as heard by said respective listening one of said conference participants (30).

3. The conference server of Claim 1, wherein coefficients of said conferencing matrix (155) are time-varying.

4. The conference server of Claim 1, wherein said conference policies includes one or more of time of day, day of week, speaking ones of said conference participants (30), simulated physical distance between said speaking ones of said conference participants (30) and listening ones of said conference participants (30), number of said speaking ones of said conference participants (30), number of said listening ones of said conference participants (30), preferences set by one or more said speaking ones of said conference participants (30), preferences set by one or more of said listening ones of said conference participants (30) and conference server policies.

5. The conference server of Claim 1, wherein said conferencing matrix (155) is represented in singular value decomposition form.

6. The conference server of Claim 1, wherein said singular value decomposition form of said conferencing matrix (155) is calculated off-line and updated as ones of said conference participants (30) leave or join said conferences calls.

7. The conference server of Claim 6, wherein said conferencing matrix (155) is a binary conferencing matrix (155).

8. The conference server of Claim 7, wherein said conferencing module (140) is further operable to decompose said binary conferencing matrix (155) into the product of two subspace matrices to produce a subspace representation of said binary conferencing matrix (155).

9. The conference server of Claim 7, wherein said conferencing module (140) is further operable to reduce a rank of said binary conferencing matrix (155) using a brute force or heuristic algorithm.

10. A method for implementing generalized conferencing, comprising:

providing a conferencing matrix (155) of conference participants (30) to conference calls;

setting values of coefficients of said conferencing matrix (155) to define a respective output media provided to each of said conference participants (30) based on respective input media received from other ones of said conference participants (30);

receiving said respective input media from said conference participants (30);

determining said respective output media for each of said conference participants (30) based on said conferencing matrix (155); and

providing said respective output media to said conference participants (30), the method being **characterized by** comprising setting values of said coefficients of said conferencing matrix (155) which are based on one or more pre-stored conference policies.

11. The method of Claim 10, wherein said setting values of said coefficients further comprises:

setting time-varying values of said coefficients of said conferencing matrix (155).

12. The method of Claim 10, further comprising:

representing said conferencing matrix (155) in singular value decomposition form.

13. The method of Claim 12, wherein said representing further comprises:

calculating said singular value decomposition form of said conferencing matrix (155) off-line; and
updating said singular value decomposition form of said conferencing matrix (155) as ones of said conference participants (30) leave or join said conferences calls.

14. The method of Claim 10, wherein said conferencing matrix (155) is a binary conferencing matrix (155), and further comprising:

decomposing said binary conferencing matrix (155) into the product of two subspace matrices to produce a subspace representation of said binary conferencing matrix (155).

15. The method of Claim 10, wherein said conferencing matrix (155) is a binary conferencing matrix (155), and further comprising:

reducing a rank of said binary conferencing matrix (155) using a brute force or heuristic algorithm.


**Patentansprüche**

1. Konferenzserver (100), umfassend:

Eine Schnittstelle (190), welche kommunikationsfähig an eine Vielzahl von von Konferenzteilnehmern (30) betriebenen Mediengeräten gekoppelt ist;
ein Konferenzmodul (140), welches betreibbar ist, um eine oder mehrere Konferenzverbindungen zu verwalten, indem es eine Conference-Matrix (155) der besagten Konferenzteilnehmer (30) für die besagten Konferenzverbindungen pflegt, wobei die besagte Conference-Matrix (155) ein jeweiliges an einen jeden der besagten Konferenzteilnehmer (30) bereitgestelltes Ausgabemedium auf der Basis von jeweiligen von anderen der besagten Konferenzteilnehmer (30) empfangenen Eingabemedien definiert; und
eine Verarbeitungsschaltungsanordnung (110), betreibbar für die Steuerung des besagten Konferenzmoduls und gekoppelt, um das besagte Eingabemedium von den besagten Konferenzteilnehmern (30) über die besagte Schnittstelle (190) zu empfangen und das besagte Eingabemedium an das besagte Konferenzmodul (140) bereitzustellen, und gekoppelt, um das besagte Ausgabemedium von dem besagten Konferenzmodul (140) zu empfangen und das besagte Ausgabemedium über die besagte Schnittstelle (190) an die besagten Konferenzteilnehmer (30) bereitzustellen, wobei der Server **dadurch gekennzeichnet ist, dass** er Koeffizienten der besagten Conference-Matrix (155) umfasst, welche auf der Basis einer oder mehrerer vorgespeicherter Konferenzrichtlinien bestimmt werden.

2. Konferenzserver nach Anspruch 1, wobei ein jeder der besagten Koeffizienten eine auf mit einem bestimmten sprechenden der besagten Konferenzteilnehmer (30) assoziierte Sprachdatenströme, wie sie von einem bestimmten zuhörenden der besagten Konferenzteilnehmer (30) gehört werden, anzuwendende Verstärkung definiert, und wobei ein jeder der besagten Koeffizienten der besagten Conference-Matrix (155) anzeigt, ob die von dem besagten jeweiligen sprechenden der besagten Konferenzteilnehmer (30) stammende Stimme, wie sie von dem besagten zuhörenden der besagten Konferenzteilnehmer (30) gehört wird, stummzuschalten oder lautzuschalten ist.

3. Konferenzserver nach Anspruch 1, wobei die Koeffizienten der besagten Conference-Matrix (155) zeitlich verän-derlich sind.

EP 2 067 347 B1

**4.** Konferenzserver nach Anspruch 1, wobei die besagten Konferenzrichtlinien eines oder mehrere der folgenden Kriterien umfassen: Uhrzeit, Wochentag, sprechende der besagten Konferenzteilnehmer (30), simulierte physische Entfernung zwischen sprechenden der besagten Konferenzteilnehmer (30) und zuhörenden der besagten Konferenzteilnehmer (30), Anzahl der besagten sprechenden der besagten Konferenzteilnehmer (30), Anzahl der besagten zuhörenden der besagten Konferenzteilnehmer (30), von einem oder mehreren der besagten sprechenden der besagten Konferenzteilnehmer (30) eingestellte Präferenzen, von einem oder mehreren der besagten zuhörenden der besagten Konferenzteilnehmer (30) eingestellte Präferenzen, und Konferenzserver-Richtlinien.

**5.** Konferenzserver nach Anspruch 1, wobei die besagte Conference-Matrix (155) in der Form einer Singulärwertzerlegung dargestellt wird.

**6.** Konferenzserver nach Anspruch 1, wobei die besagte Form der Singulärwertzerlegung der besagten Conference-Matrix (155) offline berechnet und aktualisiert wird, wenn einer oder mehrere der besagten Konferenzteilnehmer (30) die besagten Konferenzverbindungen verlassen oder diesen beitreten.

**7.** Konferenzserver nach Anspruch 6, wobei die besagte Conference-Matrix (155) eine binäre Conference-Matrix (155) ist.

**8.** Konferenzserver nach Anspruch 7, wobei das besagte Konferenzmodul (140) weiterhin betreibbar ist, um die besagte binäre Conference-Matrix (155) in das Produkt von zwei Unterraummatrizen zu zerlegen, um eine Unterraumdarstellung der besagten binären Conference-Matrix (155) zu erzeugen.

**9.** Konferenzserver nach Anspruch 7, wobei das besagte Konferenzmodul (140) weiterhin betreibbar ist, um den Rang der besagten binären Conference-Matrix (155) unter Verwendung einer Brute-Force-Methode oder eines heuristischen Algorithmus zu reduzieren.

**10.** Verfahren zur Implementierung von generalisierten Konferenzen, umfassend:

Bereitstellen einer Conference-Matrix (155) von Konferenzteilnehmern (30) an Konferenzverbindungen;
Einstellen von Koeffizientenwerten der besagten Conference-Matrix (155), um ein an einen jeden der besagten Konferenzteilnehmer (30) bereitgestelltes jeweiliges Ausgabemedium auf der Basis von jeweiligen von anderen der besagten Konferenzteilnehmer (30) empfangenen Eingabemedien zu definieren;
Empfangen der besagten jeweiligen Eingabemedien von den besagten Konferenzteilnehmern (30);
Bestimmten des besagten jeweiligen Ausgabemediums für einen jeden der besagten Konferenzteilnehmer (30) auf der Basis der besagten Conference-Matrix (155); und
Bereitstellen des besagten jeweiligen Ausgabemediums an die besagten Konferenzteilnehmer (30),

wobei das Verfahren **dadurch gekennzeichnet ist, dass** es das Einstellen der Werte der besagten Koeffizienten der besagten Conference-Matrix (155), welche auf einer oder mehreren vorgespeicherten Konferenzrichtlinien basieren, umfasst.

**11.** Verfahren nach Anspruch 10, wobei das besagte Einstellen der Werte der besagten Koeffizienten weiterhin umfasst:

Einstellen von zeitlich veränderlichen Werten der besagten Koeffizienten der besagten Conference-Matrix (155).

**12.** Verfahren nach Anspruch 10, weiterhin umfassend:

Darstellen der besagten Conference-Matrix (155) in der Form einer Singulärwertzerlegung.

**13.** Verfahren nach Anspruch 12, wobei das besagte Darstellen weiterhin umfasst:

Berechnen der besagten Form der Singulärwertzerlegung der besagten Conference-Matrix (155) offline; und
Aktualisieren der besagten Form der Singulärwertzerlegung der besagten Conference-Matrix (155), wenn einer oder mehrere der besagten Konferenzteilnehmer (30) die besagten Konferenzverbindungen verlassen oder diesen beitreten.

**14.** Verfahren nach Anspruch 10, wobei die besagte Conference-Matrix (155) eine binäre Conference-Matrix (155) ist, und weiterhin umfassend:

29

Zerlegen der besagten binären Conference-Matrix (155) in das Produkt von zwei Unterraummatrizen, um eine Unterraumdarstellung der besagten binären Conference-Matrix (155) zu erzeugen.

**15.** Verfahren nach Anspruch 10, wobei die besagte Conference-Matrix (155) eine binäre Conference-Matrix (155) ist, und weiterhin umfassend:

Reduzieren eines Rangs der besagten binären Conference-Matrix (155) unter Verwendung einer Brute-Force-Methode oder eines heuristischen Algorithmus.

## Revendications

**1.** Serveur de conférence (100), comprenant :

une interface (190) couplée en communication à une pluralité de dispositifs multimédia utilisés par des participants de conférence (30) ;
un module de conférence (140) permettant de gérer une ou plusieurs conférences téléphoniques en maintenant une matrice de conférence (155) desdits participants de conférence (30) auxdites conférences téléphoniques, ladite matrice de conférence (155) définissant un support de sortie respectif fourni à chacun desdits participants de conférence (30) sur la base de supports d'entrée respectifs provenant d'autres participants parmi lesdits participants de conférence (30) ; et
des circuits de traitement (110) permettant de commander ledit module de conférence et couplés pour recevoir lesdits supports d'entrée à partir desdits participants de conférence (30) par l'intermédiaire de ladite interface (190) et fournir lesdits supports d'entrée audit module de conférence (140) et couplés pour recevoir ledit support de sortie à partir dudit module de conférence (140) et fournir ledit support de sortie auxdits participants de conférence (30) par l'intermédiaire de ladite interface (190), le serveur étant **caractérisé en ce qu'**il comprend des coefficients de ladite matrice de conférence (155) qui sont déterminés sur la base d'une ou de plusieurs politiques de conférence pré-stockées.

**2.** Serveur de conférence selon la revendication 1, dans lequel chacun desdits coefficients définit un gain à appliquer à des flux vocaux associés à un participant particulier qui parle parmi lesdits participants de conférence (30) comme l'entend un participant particulier qui écoute parmi lesdits participants de conférence (30), et dans lequel chacun desdits coefficients de ladite matrice de conférence (155) indique si une voix provenant dudit participant respectif qui parle parmi lesdits participants de conférence (30) doit être mise en sourdine ou pas comme l'entend ledit participant respectif qui écoute parmi lesdits participants de conférence (30).

**3.** Serveur de conférence selon la revendication 1, dans lequel des coefficients de ladite matrice de conférence (155) varient dans le temps.

**4.** Serveur de conférence selon la revendication 1, dans lequel lesdites politiques de conférence comprennent une ou plusieurs informations parmi l'heure, le jour de la semaine, les participants qui parlent parmi lesdits participants de conférence (30), la distance physique simulée entre lesdits participants qui parlent parmi lesdits participants de conférence (30) et les participants qui écoutent parmi lesdits participants de conférence (30), plusieurs desdits participants qui parlent parmi lesdits participants de conférence (30), plusieurs desdits participants qui écoutent parmi lesdits participants de conférence (30), des préférences réglées par un ou plusieurs desdits participants qui parlent parmi lesdits participants de conférence (30), des préférences réglées par un ou plusieurs desdits participants qui écoutent parmi lesdits participants de conférence (30) et des politiques de serveur de conférence.

**5.** Serveur de conférence selon la revendication 1, dans lequel ladite matrice de conférence (155) est représentée sous forme de décomposition en valeurs singulières.

**6.** Serveur de conférence selon la revendication 1, dans lequel ladite forme de décomposition en valeurs singulières de ladite matrice de conférence (155) est calculée hors ligne et mise à jour lorsque certains parmi lesdits participants de conférence (30) quittent lesdites conférences téléphoniques ou y participent.

**7.** Serveur de conférence selon la revendication 6, dans lequel ladite matrice de conférence (155) est une matrice de conférence binaire (155).

**8.** Serveur de conférence selon la revendication 7, dans lequel ledit module de conférence (140) permet en outre de décomposer ladite matrice de conférence binaire (155) en un produit de deux matrices de sous-espace pour produire une représentation de sous-espace de ladite matrice de conférence binaire (155).

**9.** Serveur de conférence selon la revendication 7, dans lequel ledit module de conférence (140) permet en outre de réduire un rang de ladite matrice de conférence binaire (155) en utilisant une force brute ou un algorithme heuristique.

**10.** Procédé de mise en oeuvre d'un service de conférence généralisée, comprenant les étapes suivantes :

fournir une matrice de conférence (155) de participants de conférence (30) pour des conférences téléphoniques ;
régler des valeurs de coefficients de ladite matrice de conférence (155) pour définir un support de sortie respectif fourni à chacun desdits participants de conférence (30) sur la base de supports d'entrée respectifs provenant d'autres participants parmi lesdits participants de conférence (30) ;
recevoir lesdits supports d'entrée respectifs à partir desdits participants de conférence (30) ;
déterminer ledit support de sortie respectif pour chacun desdits participants de conférence (30) sur la base de ladite matrice de conférence (155) ; et
fournir ledit support de sortie respectif auxdits participants de conférence (30), le procédé étant **caractérisé en ce qu'**il comprend des valeurs de réglage desdits coefficients de ladite matrice de conférence (155) qui sont basés sur une ou plusieurs politiques de conférence pré-stockées.

**11.** Procédé selon la revendication 10, dans lequel lesdites valeurs de réglage desdits coefficients comprennent en outre l'étape suivante :

régler des valeurs qui varient dans le temps desdits coefficients de ladite matrice de conférence (155).

**12.** Procédé selon la revendication 10, comprenant en outre l'étape suivante :

représenter ladite matrice de conférence (155) sous forme de décomposition en valeurs singulières.

**13.** Procédé selon la revendication 12, dans lequel ladite représentation comprend en outre les étapes suivantes :

calculer ladite forme de décomposition en valeurs singulières de ladite matrice de conférence (155) hors ligne ; et
mettre à jour ladite forme de décomposition en valeurs singulières de ladite matrice de conférence (155) lorsque certains parmi lesdits participants de conférence (30) quittent lesdites conférences téléphoniques ou y participent.

**14.** Procédé selon la revendication 10, dans lequel ladite matrice de conférence (155) est une matrice de conférence binaire (155), et comprenant en outre l'étape suivante :

décomposer ladite matrice de conférence binaire (155) en un produit de deux matrices de sous-espace pour produire une représentation de sous-espace de ladite matrice de conférence binaire (155).

**15.** Procédé selon la revendication 10, dans lequel ladite matrice de conférence (155) est une matrice de conférence binaire (155), et comprenant en outre l'étape suivante :

réduire un rang de ladite matrice de conférence binaire (155) en utilisant une force brute ou un algorithme heuristique.

FIG. 1

*FIG. 2*

700

710 — PROVIDE CONFERENCING MATRIX OF CONFERENCE PARTICIPANTS

720 — SET VALUES OF MATRIX COEFFICIENTS TO DEFINE A DESIRED OUTPUT FOR EACH PARTICIPANT BASED ON INPUTS FROM OTHER PARTICIPANTS

730 — RECEIVE INPUT MEDIA FROM CONFERENCE PARTICIPANTS

740 — DETERMINE OUTPUT MEDIA FOR EACH CONFERENCE PARTICIPANT BASED ON CONFERENCING MATRIX

750 — PROVIDE OUTPUT MEDIA TO CONFERENCE PARTICIPANTS

*FIG. 7*

*FIG. 3*

EP 2 067 347 B1

*FIG. 4*

VOICE MIXER

320

COEFFICIENT A — 350a

330a — INPUT VOICE A → ⊗ — 360a

COEFFICIENT B — 350b

330b — INPUT VOICE B → ⊗ — 360b

370 — ⊕ → OUTPUT VOICE

340

COEFFICIENT C — 350c

330c — INPUT VOICE C → ⊗ — 360c

*FIG. 5*

30a

20a

330a

PARTICIPANT A — PC WITH VOIP — VOICE A

DATA

VOICE B/C — 340A

330b

30b — PARTICIPANT B — TELEPHONE — VOICE B — 330c

VOICE A/C — 340b

20b

20c

330d

LAPTOP — DATA — 340c

330c — PARTICIPANT C — CELL PHONE — VOICE C

VOICE A/B — 340d

20d

CONFERENCE ROOM — 150 — 155 — CONFERENCING MATRIX

*FIG. 6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6178237 B1